# FASCICULE DE BREVET EUROPEEN

(11) **EP 2 941 612 B1**
(45) Date de publication et mention de la délivrance du brevet: **21.08.2019**
(21) Numéro de dépôt: 13821693.2
(22) Date de dépôt: 20.12.2013
(51) Int. Cl.: F28D 20/00

(54) **SYSTEME DE CIRCULATION FLUIDIQUE POUR UNE INSTALLATION A PLUSIEURS MODULES ELEMENTAIRES DE STOCKAGE D'ENERGIE**
FLÜSSIGKEITSKREISLAUF FÜR EINE ANLAGE MIT MEHREREN ELEMENTARENERGIESPEICHERMODULEN
FLUID CIRCULATION SYSTEM FOR AN INSTALLATION HAVING MULTIPLE ELEMENTARY ENERGY STORAGE MODULES

(30) Priorité: 03.01.2013 FR 1350021
(43) Date de publication de la demande: 11.11.2015
(73) Titulaire: Commissariat à l'Énergie Atomique et aux Énergies Alternatives, 75015 Paris (FR)
(72) Inventeur: WYTTENBACH, Joël, F-73230 THOIRY (FR); PAPILLON, Philippe, F-73000 Chambery (FR); PAULUS,Cédric, F-73490 La Ravoire (FR); TANGUY, Gwennyn, F-73370 LE BOURGET DU LAC (FR)
(74) Mandataire: Novaimo
(86) Numéro de dépôt international: PCT/EP2013/077806
(87) Numéro de publication internationale: WO 2014/106597

(56) Documents cités:
- WO-A1-2012/171436
- DE-A1-102009 012 318
- FR-A1- 2 484 618
- JP-A- S59 150 257
- US-A1- 2010 281 889
- US-A1- 2011 174 296

## Description

### Domaine technique de l'invention

L'invention concerne un système de circulation fluidique, notamment de type aéraulique, destiné à alimenter en fluide une pluralité de modules élémentaires de stockage d'énergie, notamment de type thermochimique.

L'invention a pour objet également d'une part une installation comprenant un tel système de circulation fluidique et une pluralité de modules élémentaires de stockage d'énergie ayant chacun une entrée et une sortie raccordées au système, d'autre part un procédé de commande de l'installation.

L'invention concerne un système tel que défini par le préambule de la revendication 1. Le document WO2012/171436A1 décrit un système de stockage de chaleur utilisant plusieurs unités de stockage de chaleur connectées en série et/ou en parallèle. Ce document porte sur la constitution de chaque unité de stockage. Il peut être prévu un alignement vertical ou horizontal d'une pluralité de telles unités. Un élément sert au captage de chaleur et permet d'assurer le fonctionnement d'un appareil. Durant la journée, il n'est pas possible d'établir un montage série entre les unités. Durant la nuit, le montage série est possible entre des unités, moyennant un pilotage idoine de vannes, mais il n'est pas possible d'associer n'importe quelles unités entre elles dans ce montage série.

### État de la technique

On connait des installations thermiques utilisant au moins un dispositif de stockage d'énergie délivrant une puissance thermique à un flux aéraulique le traversant. Il peut notamment être utilisé dans le cadre du stockage d'énergie en intersaison de chaleur solaire, en particulier pour l'habitat. Il s'agit en particulier d'un dispositif réalisant un stockage par réaction thermochimique ou par adsorption, en utilisant un principe d'hydratation et de déshydratation d'un matériau solide poreux en utilisant l'humidité de l'air. Un dispositif est constitué par un réacteur thermochimique dit « à lit fixe ».

Toutefois, de telles installations connues présentent peu de souplesse d'utilisation, sont peu flexibles, impliquant que la gestion de la puissance thermique délivrée et de l'énergie stockée dans le dispositif est délicate.

### Objet de l'invention

Le but de la présente invention est de proposer une solution répondant à ces problématiques, notamment améliorant la souplesse d'utilisation et la flexibilité, ainsi que l'adaptabilité en fonction des besoins thermiques.

A cet effet, un premier aspect de l'invention concerne un système de circulation fluidique, notamment de type aéraulique, destiné à alimenter en fluide une pluralité de modules élémentaires de stockage d'énergie au niveau d'entrées respectives des modules élémentaires et à extraire du fluide hors des modules élémentaires au niveau de sorties respectives des modules élémentaires, ledit système comprenant un dispositif de distribution assurant une répartition d'un flux fluidique parmi tout ou partie des modules élémentaires de la pluralité et configuré de sorte à sélectionner tout ou partie des modules élémentaires parmi la pluralité et à placer les modules élémentaires sélectionnés dans une association fluidique en série entre eux et/ou dans une association fluidique en parallèle entre eux.

Le dispositif de distribution peut être configuré de sorte à varier sélectivement entre :
- au moins une première configuration dans laquelle au moins un module élémentaire de la pluralité est placé dans une association fluidique en série avec au moins un autre module élémentaire de la pluralité,
- et au moins une deuxième configuration dans laquelle au moins un module élémentaire de la pluralité est placé dans une association fluidique en parallèle avec au moins un autre module élémentaire (Mi) de la pluralité.

Il peut être fait en sorte que dans la première configuration, un premier module élémentaire de la pluralité est placé dans une association fluidique en série avec au moins un deuxième module élémentaire de la pluralité, et que dans la deuxième configuration le premier module élémentaire de la pluralité est placé dans une association fluidique en parallèle avec au moins le deuxième module élémentaire et/ou un troisième module élémentaire de la pluralité.

Il peut aussi être fait en sorte que dans la première configuration l'association fluidique en série desdits modules élémentaires est placée dans un montage fluidique en série avec au moins une association fluidique en parallèle d'au moins deux autres modules élémentaires choisis parmi la pluralité et/ou que dans la deuxième configuration l'association fluidique en parallèle desdits modules élémentaires est placée dans un montage fluidique en série avec au moins un autre module élémentaire et/ou avec au moins une association fluidique en série d'au moins deux autres modules élémentaires choisis parmi la pluralité.

Le dispositif de distribution peut être configuré de sorte à pouvoir associer en série entre eux n'importe quels modules élémentaires choisis parmi la pluralité dans la première configuration et/ou de sorte à pouvoir associer en parallèle entre eux n'importe quels modules élémentaires choisis parmi la pluralité dans la deuxième configuration et/ou de sorte à varier sélectivement entre les première et deuxième configurations et au moins une troisième configuration dans laquelle seul un module élémentaire de la pluralité est alimenté individuellement par le flux fluidique, tout module élémentaire choisi parmi la pluralité pouvant être alimenté individuellement par le flux fluidique dans la troisième configuration.

Le dispositif de distribution peut comprendre une pluralité d'enceintes à fluide respectivement associées aux modules élémentaires de la pluralité, une enceinte à fluide donnée étant destinée à être reliée aux entrée et sortie du module élémentaire associé, et chaque enceinte à fluide peut comprendre :
- des première et deuxième entrées alimentant l'enceinte en fluide à alimenter à l'entrée du module élémentaire associé,
- des première et deuxième sorties de fluide extrayant hors de l'enceinte le fluide extrait par la sortie du module élémentaire associé ou provenant des entrées,
- un volet de séparation délimitant des premier et deuxième conduits à l'intérieur de l'enceinte et monté à pivotement par rapport à l'enceinte de sorte à varier entre une première position dans laquelle le premier conduit met en communication fluidique la première entrée et la première sortie et dans laquelle le deuxième conduit met en communication fluidique la deuxième entrée et la deuxième sortie et une deuxième position dans laquelle le premier conduit ou le deuxième conduit met en communication fluidique les première et deuxième entrées et l'autre des premier et deuxième conduits met en communication fluidique les première et deuxième sorties,
- l'enceinte à fluide étant configurée de sorte que quelle que soit la position occupée par le volet de séparation, seul l'un des premier et deuxième conduits est apte à être en communication fluidique avec l'entrée du module élémentaire associé et seul l'autre des premier et deuxième conduits est destiné à être en communication fluidique avec la sortie du module élémentaire associé.

L'enceinte à fluide peut être configurée de sorte à être mise en contact contre le module élémentaire associé et la largeur des premier et deuxième conduits, au niveau du contact avec le module élémentaire (Mi) associé, est alors supérieure ou égale à la plus grande dimension des entrée et sortie du module élémentaire associé.

Le système de circulation fluidique peut comprendre un actionneur, notamment de type servomoteur, associé à chaque enceinte à fluide et assurant le pivotement du volet de séparation entre ses première et deuxième positions.

Des première et deuxième enceintes à fluide associées à deux modules élémentaires adjacents peuvent être assemblées entre elles de sorte que les première et deuxième sorties de la première enceinte sont en communication fluidique avec respectivement les première et deuxième entrées de la deuxième enceinte.

Les première et deuxième enceintes à fluide peuvent être en contact, les première et deuxième sorties de la première enceinte étant placées en regard respectivement des première et deuxième entrées de la deuxième enceinte.

Il peut être fait en sorte que dans les première et/ou deuxième configurations du dispositif de distribution, l'une des première et deuxième entrées de l'enceinte à fluide la plus en amont, suivant le sens de circulation du flux fluidique, est obturée et l'une des première et deuxième sorties de l'enceinte à fluide la plus en aval, suivant le sens de circulation du flux fluidique, est obturée.

Chaque enceinte à fluide peut délimiter un troisième conduit destiné au retour de flux fluidique après la traversée des modules élémentaires, les troisièmes conduits des enceintes à fluide étant en communication fluidique entre eux.

Le dispositif de distribution peut comprendre :
- un distributeur d'alimentation fluidique commun aux modules élémentaires de la pluralité et raccordé à l'entrée de chacun desdits modules élémentaires,
- un collecteur d'extraction fluidique commun aux modules élémentaires de la pluralité,
- des conduites de raccordement reliant le distributeur d'alimentation et le collecteur d'extraction au niveau de chaque module élémentaire, chaque conduite de raccordement étant raccordée à la sortie de l'un des modules élémentaires de la pluralité,
- un premier registre de fermeture, notamment de type « tout ou rien », associé à chaque module élémentaire et agencé sur la conduite de raccordement entre la sortie du module élémentaire associé et le raccordement au collecteur d'extraction,
- un deuxième registre de fermeture, notamment de type « tout ou rien », associé à chaque module élémentaire et agencé sur la conduite de raccordement entre la sortie du module élémentaire associé et le raccordement au distributeur d'alimentation,
- un troisième registre de fermeture, notamment de type « tout ou rien », associé à chaque module élémentaire et agencé sur le distributeur d'alimentation au niveau du module élémentaire associé.

Les premier et deuxième registres de fermeture peuvent être constitués par une vanne à trois voies placée sur la conduite de raccordement ou être reliés par une biellette à un actionneur unique, tel qu'un servomoteur, leur imposant en permanence des états opposés l'un de l'autre.

Le système peut comprendre un unique actionneur de pilotage associé à chaque module élémentaire et configuré de sorte à commander un changement d'état des premier, deuxième et troisième registres en une seule action mécanique. L'unique actionneur peut comprendre un servomoteur déplaçant en rotation un système de came entre quatre positions angulaires différentes, le déplacement du système de came entraînant un mouvement individuel de rotation entre deux positions angulaires de deux pivots distincts respectivement associés aux premier et deuxième registres et au troisième registre, les deux positions angulaires d'un pivot donné plaçant chacun des registres associés dans des états opposés, chacune des quatre positions du système de came plaçant les deux pivots dans une combinaison unique de leurs positions angulaires.

Un deuxième aspect de l'invention concerne une installation comprenant un tel système de circulation fluidique et une pluralité de modules élémentaires de stockage d'énergie ayant chacun une entrée et une sortie raccordées au système.

Au niveau de l'entrée et/ou de la sortie de chaque module élémentaire de la pluralité, le module élémentaire et/ou le dispositif de distribution peut comporter un élément d'obturation fluidique permettant d'ajuster le débit fluidique qui traverse ladite entrée et/ou ladite sortie.

Les modules élémentaires peuvent avantageusement être constitués chacun par un réacteur thermochimique ou par adsorption délivrant une puissance thermique à un flux fluidique le traversant de son entrée vers sa sortie.

Un troisième aspect de l'invention concerne un procédé de commande d'une telle installation, comprenant une étape de pilotage du dispositif de distribution réalisée de sorte à former un circuit fluidique prédéterminé, notamment de type aéraulique, correspondant à une association fluidique en série d'au moins deux modules élémentaires et/ou une association fluidique en parallèle d'au moins deux modules élémentaires et/ou une alimentation individuelle d'au moins l'un des modules élémentaires.

L'installation peut comprendre au moins des premier et deuxième modules élémentaires de stockage d'énergie constitués chacun par un réacteur thermochimique ou par adsorption délivrant une puissance thermique à un flux fluidique le traversant, et dans ce cas l'étape de pilotage peut comprendre une première phase durant laquelle le dispositif de distribution occupe la première configuration de sorte que le flux fluidique traverse successivement les premier et deuxième modules élémentaires et/ou une deuxième phase durant laquelle le dispositif de distribution occupe la deuxième configuration de sorte qu'une fraction du flux fluidique traverse le premier module élémentaire et que la fraction restante du flux fluidique traverse au moins le deuxième module élémentaire.

Il peut être fait en sorte que durant la première phase, le procédé comprenne une étape de régulation de la puissance thermique délivrée par le deuxième module élémentaire réalisée de sorte que la somme des puissances thermiques délivrées par les deux modules élémentaires associés en série se cumulent à une valeur sensiblement constante et sensiblement égale à la puissance thermique maximale que le premier module élémentaire est apte à délivrer, notamment de sorte que la puissance thermique délivrée par le deuxième module élémentaire compense une diminution progressive de la puissance thermique délivrée par le premier module élémentaire au fur et à mesure de l'avancée de la réaction dans le premier module élémentaire.

Il peut aussi être fait en sorte que durant la deuxième phase, le procédé comprenne une étape de régulation de la puissance thermique délivrée par le deuxième module élémentaire réalisée de sorte que la somme des puissances thermiques délivrées par les deux modules élémentaires associés en parallèle se cumulent à une valeur supérieure à la puissance thermique maximale que le premier module élémentaire est apte à délivrer.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 à 3 représentent trois configurations adoptées par un système de circulation fluidique selon l'invention associé à une installation à trois modules élémentaires de stockage d'énergie,
- la figure 4 illustre une installation avec un premier exemple de réalisation du système à trois enceintes à fluide associées respectivement aux trois modules élémentaires,
- la figure 5 représente deux positions adoptées par le volet de séparation d'une enceinte à fluide utilisée en figure 4,
- la figure 6 représente une variante de l'enceinte à fluide,
- les figures 7 à 9 représentent l'installation de la figure 4 dans les configurations des figures 1 à 3 respectivement,
- la figure 10 représente une variante d'enceinte à fluide,
- la figure 11 illustre une installation avec un deuxième exemple de réalisation du système associé aux trois modules élémentaires,
- la figure 12 représente un exemple de montage correspondant à l'installation de la figure 11,
- la figure 13 est une variante de l'exemple de montage selon une vue du détail A de la figure 12,
- les figures 14 à 17 sont des vues de détail B de la figure 13, respectivement dans quatre positions du système de came,
- les figures 18a, 18b, 18c représentent trois graphes donnant les évolutions, en fonction du temps t, de la puissance thermique P1, P2 et PT délivrée respectivement par un premier module élémentaire, par un deuxième module élémentaire régulé, et par l'association fluidique en série des premier et deuxième modules élémentaires,
- et la figure 19 représente un graphe donnant l'évolution, en fonction du temps t, de la puissance thermique PT délivrée par une association fluidique en parallèle de deux modules élémentaires sur une période T donnée de l'avancement de la réaction thermochimique dans l'un de ces modules,
- et les figures 20 à 25 représentent schématiquement différents exemples d'associations fluidiques en série et/ou en parallèle dans les première et/ou deuxième configurations.

### Description de modes préférentiels de l'invention

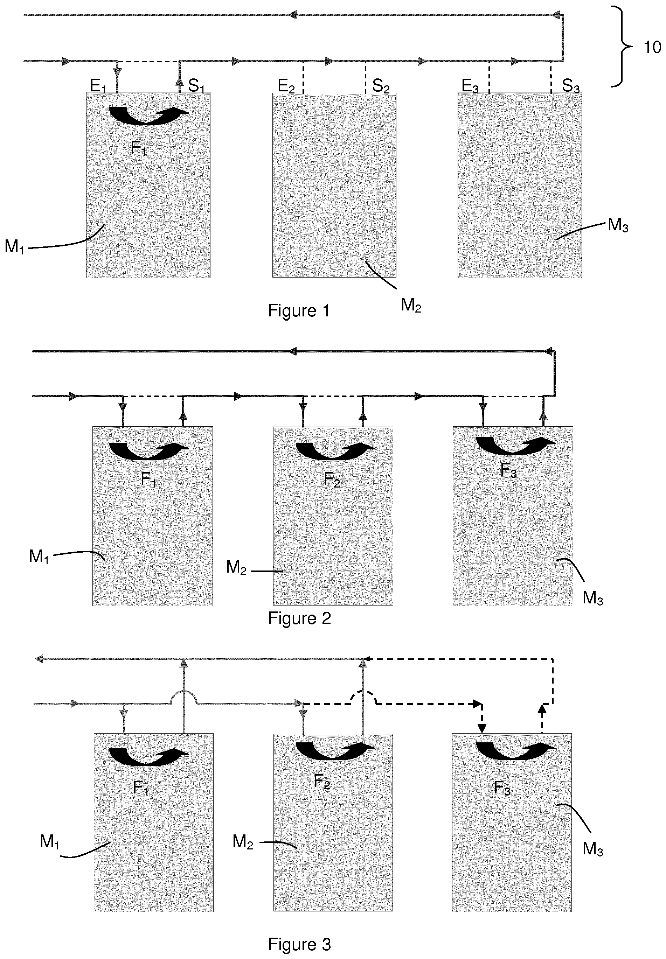

L'invention, en référence aux figures 1 à 17, concerne, de manière générale et selon un aspect de l'invention, une installation qui comprend d'une part un système de circulation fluidique (notamment de type aéraulique) selon un autre aspect de l'invention et d'autre part une pluralité de modules élémentaires de stockage d'énergie Mᵢ, ayant chacun une entrée Eᵢ et une sortie Sᵢ raccordées au système de circulation fluidique. Le système de circulation fluidique est destiné à alimenter en fluide la pluralité de modules élémentaires Mᵢ au niveau des entrées Eᵢ respectives des modules élémentaires Mᵢ et à extraire du fluide hors des modules élémentaires Mᵢ au niveau des sorties Sᵢ respectives des modules élémentaires Mᵢ.

Il s'agit en particulier, mais de manière non limitative, de constituer une installation thermique capable de stocker en intersaison de l'énergie solaire et de restituer tout ou partie de cette énergie stockée, notamment sous la forme de chaleur, par exemple dans le cadre d'une fonction de chauffage d'un habitat. Le stockage d'énergie et sa restitution par chacun des modules élémentaires Mᵢ peuvent notamment se pratiquer selon un principe thermochimique. En particulier, les modules élémentaires de stockage d'énergie Mᵢ peuvent être constitués chacun par un réacteur thermochimique, ou par adsorption, notamment de type dit « à lit fixe », délivrant une puissance thermique Pi à un flux fluidique Fᵢ le traversant de son entrée Eᵢ vers sa sortie Sᵢ. Le flux fluidique Fᵢ peut notamment être de type aéraulique, en mettant en oeuvre une circulation d'un gaz, par exemple de l'air grâce au système. L'indice noté « i » correspond à un indice d'identification des modules élémentaires au sein de la pluralité : ainsi, si l'installation comprend une pluralité de modules élémentaires de stockage d'énergie à n modules, alors il sera compris que i varie entre 1 et n.

Les figures 1 à 17 illustrent un exemple particulier d'installation comprenant de manière non limitative trois modules élémentaires de stockage d'énergie. Ils sont donc repérés respectivement M₁, M₂ et M₃ en allant de gauche à droite. Les entrées de ces trois modules, connectées au système de circulation fluidique, sont respectivement repérées E₁, E₂ et E₃. De même, les sorties de ces trois modules, également connectées au système de circulation fluidique, sont respectivement repérées S₁, S₂ et S₃. Les flux fluidiques qui traversent les trois modules sont quant à eux repérés F₁, F₂ et F₃.

Il convient de préciser qu'il peut être prévu une circulation fluidique unidirectionnelle dans les modules, ou bien une circulation fluidique dans un sens donné ou dans le sens inverse. Autrement dit, dans ce deuxième cas, il est fait en sorte que le composant d'un module jouant le rôle d'entrée lorsque le fluide circule à l'intérieur du module dans un premier sens puisse jouer le rôle de sortie lorsque le fluide circule à l'intérieur du module dans un deuxième sens opposé au premier sens. De même, il peut être fait en sorte que le composant du module jouant le rôle de sortie lorsque le fluide circule à l'intérieur du module dans le premier sens puisse jouer le rôle d'entrée lorsque le fluide circule à l'intérieur du module dans le deuxième sens.

Le système de circulation fluidique comprend avantageusement des moyens lui permettant d'ajuster, en fonction de critères de gestion donnés, le flux fluidique Fᵢ qui traverse chacun des modules élémentaires Mᵢ. Ainsi, le système de circulation fluidique comprend avantageusement un dispositif de distribution 10 qui assure une répartition d'un flux fluidique total repéré FT parmi tout ou partie des modules élémentaires Mᵢ de la pluralité. A tout instant, ce flux fluidique total FT, notamment de nature aéraulique, est égal à la somme de tous les flux Fᵢ qui traversent tous les modules élémentaires Mᵢ de la pluralité.

Le dispositif de distribution 10 est configuré de sorte à sélectionner tout ou partie des modules élémentaires parmi la pluralité et à placer les modules élémentaires sélectionnés dans une association fluidique en série entre eux et/ou dans une association fluidique en parallèle entre eux. En particulier, le dispositif de distribution 10 est avantageusement configuré de sorte à varier sélectivement entre :
- au moins une première configuration (figure 2) dans laquelle au moins un module élémentaire de la pluralité est placé dans une association aéraulique en série avec au moins un autre module élémentaire de la pluralité, notamment l'un quelconque des modules élémentaires de la pluralité,
- et au moins une deuxième configuration (figure 3) dans laquelle au moins un module élémentaire de la pluralité est placé dans une association aéraulique en parallèle avec au moins un autre module élémentaire de la pluralité, notamment l'un quelconque des modules élémentaires de la pluralité.

La première configuration peut prévoir la mise en série de tous les modules élémentaires de la pluralité, ou de seulement une partie des modules élémentaires de la pluralité choisie parmi la pluralité. De même, la deuxième configuration peut prévoir la mise en parallèle de tous les modules élémentaires de la pluralité, ou de seulement une partie des modules élémentaires de la pluralité choisie parmi la pluralité.

Dans le cas où seule une partie des modules élémentaires est associée en série dans la première configuration, l'association fluidique en série des modules élémentaires dans la première configuration peut être placée dans un montage fluidique en série avec au moins une association fluidique en parallèle d'au moins deux autres modules élémentaires choisis parmi la pluralité.

Alternativement ou de manière combinée, dans le cas où seule une partie des modules élémentaires est associée en parallèle dans la deuxième configuration, l'association fluidique en parallèle des modules élémentaires dans la deuxième configuration peut être placée dans un montage fluidique en série avec au moins un autre module élémentaire et/ou avec au moins une association fluidique en série d'au moins deux autres modules élémentaires choisis parmi la pluralité.

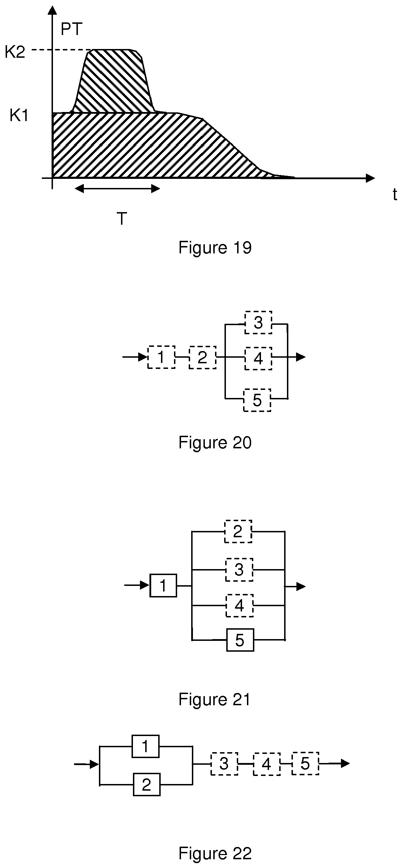

Les figures 20 à 23 illustrent différentes solutions ci-dessus :
- sur la figure 20, l'association fluidique en série des modules repérés 1 et 2 est placée dans un montage fluidique en série, en amont, avec une association fluidique en parallèle de trois modules repérés 3, 4 et 5.
- sur la figure 21, le module élémentaire repéré 1 est placé dans un montage en série, en amont, avec une association fluidique en parallèle de quatre modules 2 à 5.
- sur la figure 22, l'association fluidique en parallèle des deux modules 1 et 2 est placée dans un montage en série, en amont, avec une association fluidique en série des trois modules 3 à 5.

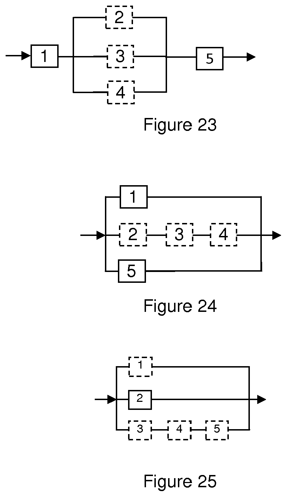

- sur la figure 23, le module élémentaire repéré 1 est placé dans un montage en série, en amont, avec une association fluidique en parallèle de trois modules 2 à 4, elle-même placée dans un montage en série, en amont, avec un module élémentaire repéré 5.

Il est possible de prévoir que le passage d'une configuration à l'autre du dispositif de distribution permette de réaliser le changement suivant : au moins un module élémentaire de la pluralité placé dans l'une des première et deuxième configurations dans une association fluidique en série avec au moins un module élémentaire elle-même placée dans un montage fluidique en parallèle avec un autre module élémentaire ou avec une autre association fluidique en série d'autres modules élémentaires de la pluralité, est placé dans l'autre des première et deuxième configurations en série fluidique avec ledit autre module élémentaire ou avec ladite autre association fluidique en série. Les figures 24 et 25 illustrent un tel exemple :
- sur la figure 24, un module 1 est placé dans un montage fluidique en parallèle avec un module 5 et avec une association fluidique en série des modules 2, 3 à 4.
- sur la figure 25, le module 1 est placé dans un montage fluidique en parallèle avec le module 2 et avec une association fluidique en série des modules 3, 4 et 5.

Autrement dit, les modules élémentaires 3 et 4 de la pluralité placés dans la configuration de la figure 24 dans une association fluidique en série avec le module élémentaire 2 elle-même placée dans un montage fluidique en parallèle avec le module élémentaire 5 et avec le module élémentaire 1 de la pluralité, sont placés dans l'autre configuration de la figure 25 en série fluidique avec ledit autre module élémentaire 5.

Ainsi, une distinction supplémentaire entre les figures 24 et 25, c'est la position de la branche comprenant l'association en série : celle-ci est sur la branche du milieu d'une association parallèle (figure 24) ou sur la dernière branche (figure 25). Cette distinction est nécessaire parce que certains modes de réalisation sont sensibles à ce positionnement.

Sur les figures 20 à 25, les modules représentés en traits pleins sont toujours traversés par un flux fluidique. Les modules représentés en traits discontinus sont traversés ou non par le flux fluidique, ce qui définit pour chacune des figures 20 à 25 un certain nombre de combinaisons possibles.

Les modules Mᵢ associés en série dans la première configuration ne correspondent pas forcément tous aux modules associés en parallèle dans la deuxième configuration. Le flux fluidique total FT traverse successivement les au moins deux modules élémentaires en série dans la première configuration. Par contre dans la deuxième configuration, une fraction du flux fluidique total FT traverse l'un des modules élémentaires de l'association fluidique en parallèle tandis que la fraction restante du flux fluidique total FT traverse au moins un autre module élémentaire de l'association fluidique en parallèle.

Dans un mode particulier de réalisation, dans la première configuration, un premier module élémentaire de la pluralité est placé dans une association fluidique en série avec au moins un deuxième module élémentaire de la pluralité, tandis que dans la deuxième configuration, le premier module élémentaire de la pluralité est placé dans une association fluidique en parallèle avec au moins le deuxième module élémentaire et/ou un troisième module élémentaire de la pluralité. Il reste toutefois possible qu'aucun des modules associés en série dans la première configuration ne correspondent à un module associé en parallèle dans la deuxième configuration. Autrement dit, il est possible que les modules utilisés dans la première configuration ne soit pas utilisé dans la deuxième configuration, et inversement.

De manière générale, le dispositif de distribution 10 est configuré de sorte que les modules élémentaires associés en série dans la première configuration sont quelconques parmi la pluralité, de sorte à pouvoir associer en série entre eux n'importe quels modules choisis parmi la pluralité.

Par contre dans un mode particulier de réalisation uniquement, les modules élémentaires associés en parallèle dans la deuxième configuration sont quelconques parmi la pluralité, de sorte à pouvoir associer en parallèle entre eux n'importe quels modules choisis parmi la pluralité.

Ainsi, dans l'exemple particulier illustré dans lequel l'installation comprend trois modules élémentaires Mᵢ, le dispositif de distribution 10 peut adopter quatre premières configurations différentes et quatre deuxièmes configurations différentes.

En effet, la figure 2 représente uniquement un exemple de première configuration dans laquelle les trois modules M₁, M₂ et M₃ de la pluralité sont associés en série entre eux. Toutefois, le dispositif de distribution 10 est capable de placer l'installation dans :
- une autre première configuration dans laquelle seuls les modules M₁, M₂ sont associés en série entre eux,
- et dans encore une autre première configuration dans laquelle seuls les modules M₂, M₃ sont associés en série entre eux,
- et encore dans une autre première configuration dans laquelle seuls les modules M₁ et M₃ sont associés en série entre eux.

De même, la figure 3 représente uniquement un exemple de deuxième configuration dans laquelle tout ou partie des trois modules M₁, M₂ et M₃ de la pluralité sont associés en parallèle entre eux. Le dispositif de distribution 10 est capable de placer l'installation dans :
- une autre deuxième configuration dans laquelle seuls les modules M₁, M₂ sont associés en parallèle entre eux,
- et dans encore une autre première configuration dans laquelle seuls les modules M₂, M₃ sont associés en parallèle entre eux,
- et encore dans une autre première configuration dans laquelle seuls les modules M₁ et M₃ sont associés en parallèle entre eux.

Avantageusement mais de manière non limitative, le dispositif de distribution 10 sera configuré de sorte à pouvoir réaliser toutes les combinaisons d'association en série et en parallèle entre au moins deux modules Mᵢ de la pluralité.

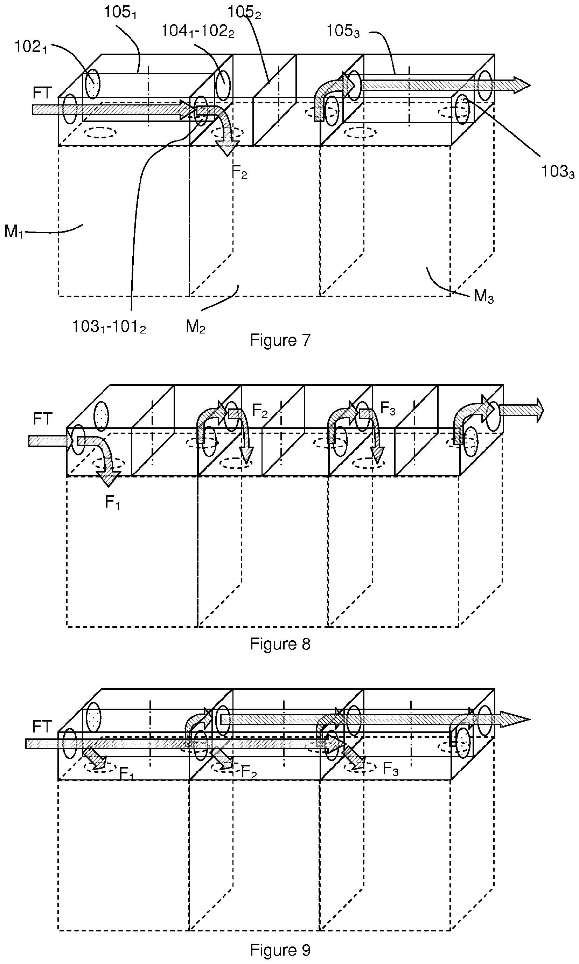

Avantageusement, le dispositif de distribution 10 est configuré de sorte à varier sélectivement entre :
- au moins une première configuration décrite précédemment,
- au moins une deuxième configuration décrite précédemment,
- et au moins une troisième configuration (figure 1) dans laquelle seul un module élémentaire Mᵢ (i étant égal à 1 sur la figure 1 et i étant égal à 2 sur la figure 7) de la pluralité est alimenté individuellement par le flux fluidique total FT, les autres modules élémentaires n'étant pas alimenté par le fluide.

Dans un mode avantageux non exclusif, tout module élémentaire choisi parmi la pluralité peut être alimenté individuellement par le flux fluidique dans la troisième configuration.

Dans le cas particulier de la figure 1, seul le module élémentaire M₁ est traversé par le flux fluidique total et les flux F₂ et F₃ sont nuls. Le dispositif de distribution 10 peut réaliser un montage équivalent sélectivement avec les modules M₂ ou M₃ également. Autrement dit, le dispositif de distribution 10 est apte à être placé dans trois troisièmes configurations différentes dans le cas où l'installation comprend trois modules élémentaires (i variant de 1 à 3).

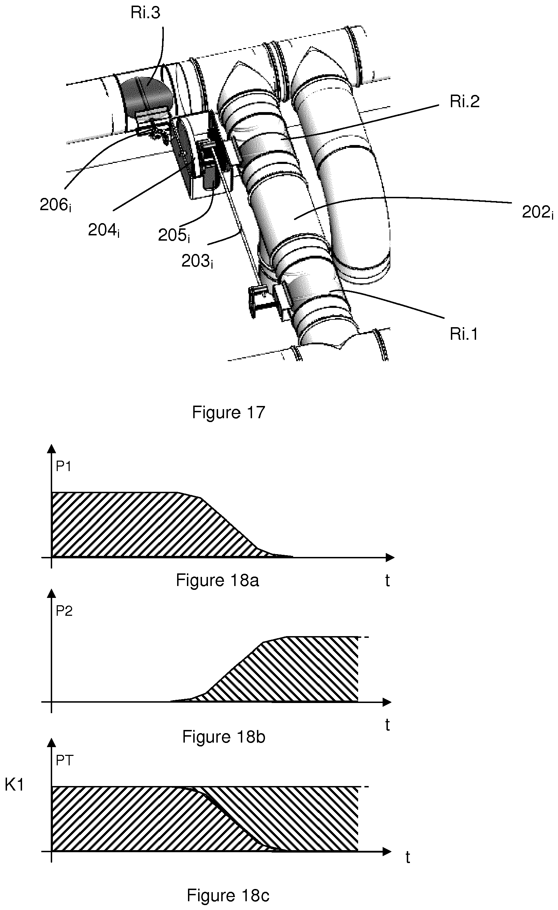

Dans le cadre du stockage en intersaison de chaleur solaire, en particulier thermochimique à lit fixe, il peut alors être envisagé de décomposer un volume de stockage global correspondant au volume nécessaire au fonctionnement de l'installation (dépendant des besoins à fournir par l'installation) en plusieurs tels modules élémentaires Mᵢ. Le dispositif de distribution 10 permet d'utiliser ces modules élémentaires Mᵢ soit de manière individuelle (et donc successivement), soit simultanément pour avoir une puissance thermique supérieure. S'ils sont utilisés simultanément, les modules peuvent être branchés en parallèle ou en série. Une association fluidique en parallèle permet de faire passer un débit d'air bien plus élevé et donc d'obtenir une plus forte puissance de chauffe. Une association en série est utile pour exploiter un maximum de l'énergie stockée dans les modules sans subir de faibles puissances de chauffe qui risqueraient d'impliquer des températures en dessous de celles souhaitées. En effet, à débit constant, la puissance de chauffe déstockée diminue lors du déchargement (voir figure 18a). Ainsi, en connectant deux modules en série, si le premier est plutôt déchargé, il sert à préchauffer l'air, le second module permet d'amener l'air à la température souhaitée.

Ainsi de manière générale, selon encore un autre aspect de l'invention, le procédé de commande d'une telle installation comprend une étape de pilotage du dispositif de distribution 10 réalisée de sorte à former un circuit fluidique prédéterminé, notamment de type aéraulique, correspondant à une association fluidique en série d'au moins deux modules élémentaires Mᵢ et/ou une association fluidique en parallèle d'au moins deux modules élémentaires Mᵢ et/ou une alimentation individuelle d'au moins l'un des modules élémentaires Mᵢ.

En particulier, l'étape de pilotage du dispositif de distribution 10 peut être réalisée de sorte à faire varier le dispositif de distribution 10 entre une première configuration et une deuxième configuration distinctes, les première et deuxième configurations formant, en combinaison avec les modules élémentaires Mᵢ, respectivement des premier et deuxième circuits fluidiques, notamment de type aéraulique, chacun des premier et deuxième circuits fluidiques étant choisi parmi au moins l'une des associations fluidiques suivantes :
- une association fluidique en série d'au moins deux modules élémentaires Mᵢ (figures 2 et 18c),
- une association fluidique en parallèle d'au moins deux modules élémentaires Mᵢ (figures 3 et 19),
- une alimentation individuelle d'au moins l'un des modules Mᵢ élémentaires (figures 1 et 18a).

Dans le cas particulier où l'installation comprend au moins des premier et deuxième modules élémentaires de stockage d'énergie constitués chacun par un réacteur thermochimique, notamment de type dit « à lit fixe », ou par adsorption, l'étape de pilotage pourra comprendre une première phase (figure 18c) durant laquelle le dispositif de distribution occupe la première configuration de sorte que le flux fluidique total traverse successivement les premier et deuxième modules élémentaires et/ou une deuxième phase (figure 19) durant laquelle le dispositif de distribution occupe la deuxième configuration de sorte qu'une fraction du flux fluidique traverse le premier module élémentaire et que la fraction restante traverse au moins le deuxième module élémentaire. Lorsque les premier et deuxième modules sont traversés par un flux fluidique Fᵢ, chacun des réacteurs thermochimiques qui les constituent délivre une puissance thermique au flux fluidique traversant.

La figure 18a représente un graphe donnant l'évolution, en fonction du temps t, de la puissance thermique P1 délivrée par un premier module élémentaire. La figure 18b représente un graphe donnant l'évolution, en fonction du temps t, de la puissance thermique P2 délivrée par un deuxième module élémentaire régulé au niveau de la puissance thermique qu'il délivre. La figure 18c représente enfin un graphe donnant l'évolution, en fonction du temps t, de la puissance thermique PT délivrée par l'association fluidique en série de ces premier et deuxième modules élémentaires : il s'agit de la somme des graphes des figures 18a et 18b.

Ainsi la figure 18c correspond à une telle première phase durant laquelle le dispositif de distribution 10 occupe la première configuration. Le procédé comprend une étape de régulation de la puissance thermique P2 délivrée (figure 18b) par le deuxième module élémentaire réalisée de sorte que la somme PT (figure 18c) des puissances thermiques P1, P2 délivrées par les deux modules élémentaires associés en série se cumulent à une valeur K1 sensiblement constante égale à la puissance thermique P1 maximale que le premier module élémentaire (celui de la figure 18a) est apte à délivrer. La régulation en puissance thermique du deuxième module peut notamment être réalisée de sorte que la puissance thermique P2 délivrée par ce deuxième module puisse compenser la diminution progressive naturelle (représentée à la figure 18a) de la puissance thermique P1 délivrée par le premier module élémentaire au fur et à mesure de l'avancée de la réaction au sein du premier module élémentaire.

L'avancement de la réaction sur la figure 18a peut être assimilé à un temps t dans la mesure où le réactif gazeux est fourni avec un débit donné et constant.

La régulation en puissance thermique du deuxième réacteur peut se faire simplement par son agencement en seconde position de l'association fluidique en série où le premier réacteur est en fin de réaction. Le flux gazeux réactif est rapproché de l'équilibre par le premier réacteur, de sorte que le second réacteur fournisse une puissance P2 partielle fonction de l'écart à l'équilibre (valeur constante). En début de réaction, le premier module amène le flux de fluide à l'équilibre, donc il n'y a pas besoin de passer dans le deuxième module.

La figure 19 par contre représente le graphe donnant l'évolution, en fonction du temps t, de la puissance thermique PT délivrée par l'association fluidique en parallèle de deux modules élémentaires sur une période T donnée de l'avancement de la réaction thermochimique dans le premier module. Autrement dit, durant la deuxième phase correspondant à la période T durant laquelle le dispositif de distribution 10 occupe la deuxième configuration, le procédé comprend une étape de régulation de la puissance thermique P2 délivrée par le deuxième module élémentaire réalisée de sorte que la somme PT des puissances thermiques P1, P2 délivrées par les deux modules élémentaires associés en parallèle se cumulent à une valeur K2 supérieure à la puissance thermique P1 maximale que le premier module élémentaire est apte à délivrer. Ceci permet surtout d'augmenter le débit de gaz réactif et caloporteur traversant.

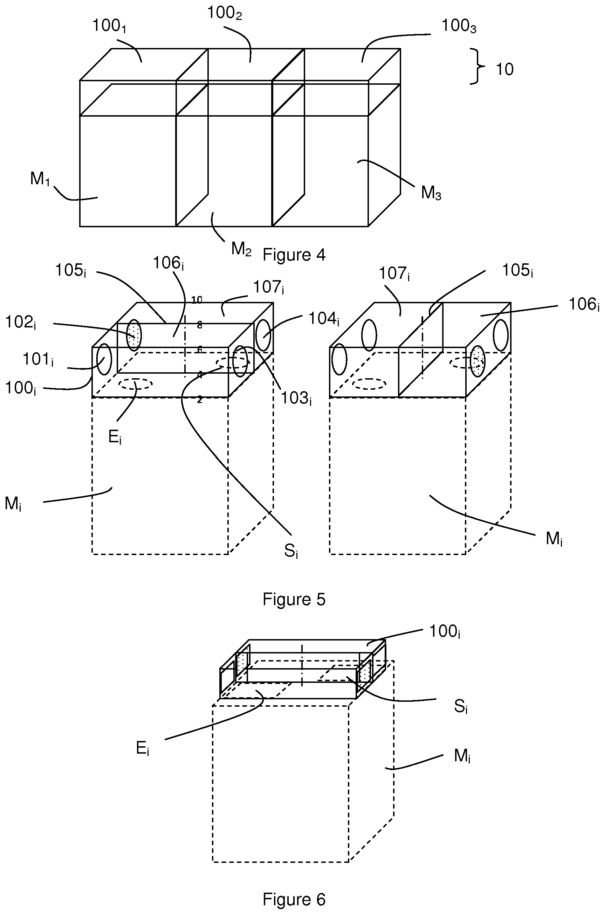

Dans un premier mode de réalisation correspondant aux figures 4 à 10, le dispositif de distribution 10 peut comprendre une pluralité d'enceintes à fluide 100ᵢ respectivement associées aux modules élémentaires Mᵢ de la pluralité. Une enceinte à fluide 100ᵢ donnée est destinée à être reliée aux entrée Eᵢ et sortie Sᵢ du module élémentaire Mᵢ associé. Ainsi, dans l'exemple représenté d'installation à trois modules M₁ à M₃, le dispositif de distribution 10 comprend (figure 4) respectivement trois enceintes à fluide repérées 100₁, 100₂ et 100₃.

Chaque enceinte à fluide 100ᵢ associé au module élémentaire Mᵢ comprend en référence à la figure 5 :
- une première entrée 101ᵢ et une deuxième entrée 102ᵢ alimentant l'enceinte en fluide 100ᵢ en fluide à alimenter ensuite à l'entrée Eᵢ du module élémentaire Mᵢ associé,
- une première sortie de fluide 103ᵢ et une deuxième sortie de fluide 104ᵢ extrayant hors de l'enceinte le fluide préalablement extrait par la sortie Sᵢ du module élémentaire Mᵢ associé ou provenant des entrées (101ᵢ, 102ᵢ),
- un volet de séparation 105ᵢ délimitant un premier conduit 106ᵢ et un deuxième conduit 107ᵢ à l'intérieur de l'enceinte 100ᵢ et monté à pivotement par rapport à l'enceinte 100ᵢ de sorte à varier entre une première position (figure 5 à gauche) et une deuxième position (figure 5 à droite).

Dans la première position du volet 105ᵢ, le premier conduit 106ᵢ met en communication fluidique la première entrée 101ᵢ et la première sortie 103i et l'entrée Eᵢ tandis que le deuxième conduit 107ᵢ met en communication fluidique la deuxième entrée 102ᵢ et la deuxième sortie 104ᵢ et la sortie Sᵢ. Dans la deuxième position du volet 105ᵢ, le deuxième conduit 107ᵢ met en communication fluidique les première et deuxième entrées 101ᵢ et 102ᵢ et l'entrée Eᵢ et le premier conduit 106ᵢ met en communication fluidique les première et deuxième sorties 103ᵢ et 104ᵢ et la sortie Sᵢ.

L'enceinte à fluide 100ᵢ est configurée de sorte que quelle que soit la position occupée par le volet de séparation 105ᵢ, seul l'un des premier et deuxième conduits 106ᵢ, 107ᵢ est apte à être en communication fluidique avec l'entrée Eᵢ du module élémentaire Mᵢ associé et seul l'autre des premier et deuxième conduits 106ᵢ, 107ᵢ est destiné à être en communication fluidique avec la sortie Si du module élémentaire Mᵢ associé.

De la manière représentée sur toutes les figures, une enceinte à fluide 100ᵢ donnée est configurée de sorte à être mise en contact contre le module élémentaire Mᵢ associé, par exemple au niveau d'une face supérieure du module élémentaire. La largeur des premier et deuxième conduits 106ᵢ et 107ᵢ, au niveau du contact avec le module élémentaire Mᵢ associé, est supérieure ou égale à la plus grande dimension des entrée Eᵢ et sortie Sᵢ du module élémentaire Mᵢ associé. L'enceinte présente par exemple une largeur supérieure au double du diamètre des entrée et sortie Eᵢ, Sᵢ, ou alors au moins la somme de ces deux diamètres.

Le dispositif de distribution 10 comprend en outre un actionneur (non représenté), notamment de type servomoteur, associé à chaque enceinte à fluide 100ᵢ et assurant le pivotement du volet de séparation 105ᵢ entre ses première et deuxième positions.

De la manière illustrée sur les figures 7 à 9, des première et deuxième enceintes à fluide 100₁, 100₂ associées à deux modules élémentaires M₁, M₂ adjacents sont assemblées entre elles de sorte que les première et deuxième sorties 103₁, 104₁ de la première enceinte 100₁ sont en communication fluidique avec respectivement les première et deuxième entrées 101₂, 102₂ de la deuxième enceinte 100₂. Il en est de même pour les modules élémentaires 100₂ et 100₃ qui sont adjacents et en contact entre eux. Plus précisément, un assemblage simplifié prévoit que les première et deuxième enceintes à fluide 100₁, 100₂ sont en contact d'une manière telle que les première et deuxième sorties 103₁, 104₁ de la première enceinte 100₁ sont placées en regard respectivement des première et deuxième entrées 101₂, 102₂ de la deuxième enceinte 100₂.

Dans les première et/ou deuxième configurations du dispositif de distribution 10, l'une des première et deuxième entrées 101₁, 102₁ de l'enceinte à fluide 100₁ (celle la plus à gauche sur les figures 7 à 9) la plus en amont, suivant le sens de circulation du flux fluidique FT, est obturée. Il s'agira avantageusement d'obturer l'entrée 102₁ la plus éloignée des entrée E₁ et sortie S1 du premier module élémentaire M₁. De même, l'une des première et deuxième sorties 103₃, 104₃ de l'enceinte à fluide 100₃ (celle la plus à droite sur les figures 7 à 9) la plus en aval, suivant le sens de circulation du flux fluidique FT, est également obturée. Il s'agira avantageusement d'obturer la sortie 103₃ la plus éloignée des entrée E₃ et sortie S3 du dernier module élémentaire M₃.

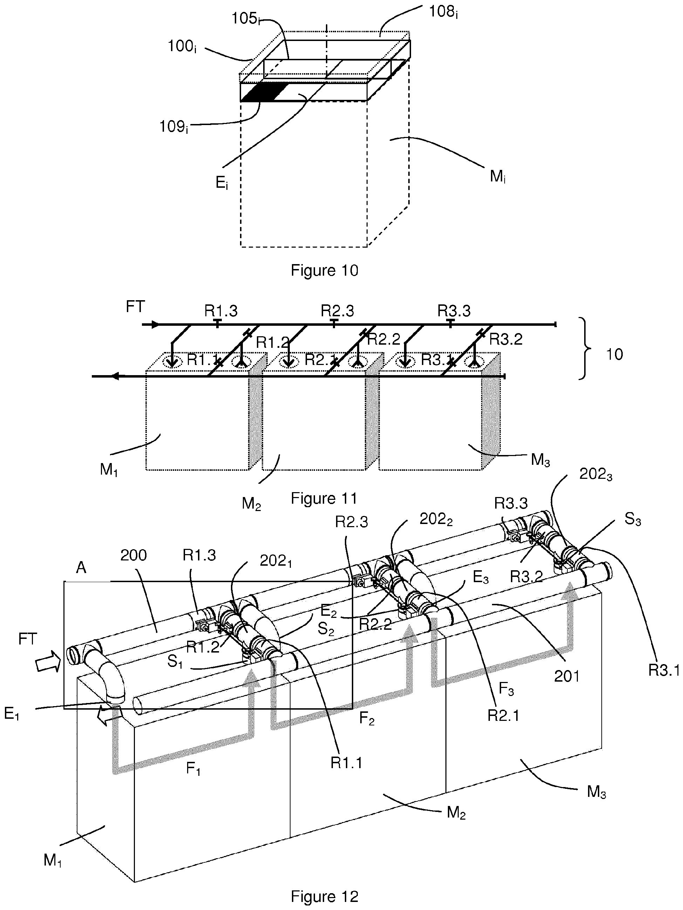

Dans la variante de la figure 10, chaque enceinte à fluide 100ᵢ peut délimiter un troisième conduit 108ᵢ destiné au retour de flux fluidique après la traversée des modules élémentaires Mᵢ associés en série et/ou en parallèle. Les troisièmes conduits des enceintes à fluide 100₁, 100₂, 100₃ sont en communication fluidique entre eux pour permettre le retour fluidique.

Au niveau de l'entrée Eᵢ et/ou de la sortie Sᵢ de chaque module élémentaire Mᵢ de la pluralité, ce module élémentaire Mᵢ et/ou le dispositif de distribution 10 peut comporter (figure 10) un élément d'obturation fluidique 109ᵢ permettant d'ajuster le débit du flux fluidique Fᵢ qui traverse l'entrée Eᵢ et/ou la sortie Sᵢ, de manière tout ou rien ou bien de manière progressive entre un débit nul et un débit maximal. Il peut s'agir d'un volet de type guillotine entrainé par un vérin. Cela permet de réaliser par exemple une mise en parallèle d'un nombre donné de modules élémentaires. Alternativement, il est possible de prévoir au niveau d'au moins l'une des entrées 101ᵢ, 102ᵢ un élément d'obturation de type volet papillon.

Une enceinte à fluide présente par exemple une forme de parallélépipède rectangle dont la longueur est égale à celle d'un module élémentaire et la largeur est inférieure ou égale à celle du module élémentaire. La base de l'enceinte est idéalement carrée de la manière illustrée sur les figures 5 à 10. Sur chacune de deux faces latérales opposées sont aménagées deux ouvertures, par exemple de forme circulaire, symétriques par rapport à un axe médian vertical. Les diamètres de ces ouvertures sont égaux entre eux et égaux à ceux des ouvertures des réacteurs. Les ouvertures d'une face latérale constituent les première et deuxième entrées de l'enceinte. Les ouvertures de l'autre face latérale opposée constituent les première et deuxième sorties de l'enceinte. Les ouvertures du module constituent ses entrée Eᵢ et sortie Sᵢ.

Le volet 105ᵢ est plan et de forme rectangulaire. Il présente une longueur égale à la dimension de la plus petite entre la longueur et la largeur de l'enceinte à fluide. Dans le cas où l'enceinte n'est pas carrée, des butées pourront être agencées pour compenser les écarts entre la longueur et la largeur. La hauteur du volet 105ᵢ est égale à celle de l'enceinte, c'est-à-dire au moins égale au diamètre des ouvertures circulaires. L'axe de rotation du volet 105ᵢ est vertical et passe par le centre du rectangle formé par la face supérieure de l'enceinte 100ᵢ.

La face inférieure de l'enceinte 100ᵢ n'est pas nécessairement matérialisée par une paroi puisque le montage de l'enceinte sur un module Mᵢ permet à ce dernier de la réaliser. Un dispositif de butée avec des moyens d'étanchéité permet au volet 105ᵢ de réaliser l'étanchéité dans ses deux positions.

Dans la première position, le volet 105ᵢ délimite les deux conduits étanches 106ᵢ, 107ᵢ orientés parallèlement à la longueur de l'enceinte 100ᵢ, juxtaposés dans sa largeur et de hauteur égale à celle de l'enceinte. Une connexion aéraulique est ainsi réalisée entre les ouvertures alignées des faces opposées. Chaque conduit 106ᵢ, 107ᵢ contient également l'une des deux ouvertures du module élémentaire. A l'opposé, il n'y a pas de circulation possible dans l'enceinte entre deux ouvertures d'une même face, ni entre les deux ouvertures du module élémentaire. Cette position permet de court-circuiter un module élémentaire (cas du modules M₁ et M₃ sur la figure 7, seul le module M₂ étant alimenté individuellement) ou de fonctionner à plusieurs modules élémentaires en parallèle (cas de la figure 9 pour les trois modules M₁ à M₃). Ce court-circuitage est obtenu malgré la présence des entrées et sorties Eᵢ et Sᵢ car les pertes de charges au sein des modules sont très élevées.

Dans la deuxième position, le volet 105ᵢ permet de forcer le passage à travers le module élémentaire concerné. Cette position est notamment utilisée pour le fonctionnement individuel d'un module (cas du module M₂ sur la figure 7) seul ou dans une association fluidique en série (cas de la figure 8 pour les trois modules M₁ à M₃). Le volet 105ᵢ découpe le volume de l'enceinte 100ᵢ en deux volumes juxtaposés dans la longueur, la hauteur étant égale à celle de l'enceinte 100ᵢ. Il n'y a pas de circulation dans l'enceinte entre les ouvertures (entrées en sorties) se faisant face, ni entre les deux ouvertures (Eᵢ, Sᵢ) du module élémentaire Mᵢ. Il y a par contre une circulation entre les ouvertures d'une même face latérale de l'enceinte 100ᵢ et l'une des deux ouvertures du module élémentaire.

Les ouvertures de l'enceinte 100ᵢ sont par exemple circulaires pour faciliter le raccordement à un réseau de gaines standardisées. Il est également possible d'opter pour des ouvertures carrées ou rectangulaires (figure 10) si le réseau aéraulique est composé d'éléments de ce type. Les ouvertures du module élémentaire Mᵢ sont également représentées de manière circulaire sur les figures 5 à 9. Cette géométrie n'est pas limitative puisqu'une forme quelconque respectant l'encombrement peut convenir. Pour fermer le circuit aéraulique aux extrémités latérales d'un assemblage de modules élémentaires, il est nécessaire d'obturer l'une des deux ouvertures de l'enceinte située au début de l'association fluidique et l'une des deux ouvertures de l'enceinte en fin d'association fluidique. Ces deux obturations ne doivent pas être disposées face à face. Les ouvertures restantes, une à chaque extrémité, servent à raccorder les tubulures pour les flux d'air entrant et sortant dans l'association fluidique. Les ouvertures à obturer son symbolisées en surfaces pointillées sur les figures 5 à 9.

Les ouvertures du module élémentaire doivent respecter une disposition particulière. La projection verticale de l'enceinte 100ᵢ sur la face supérieure du module élémentaire Mᵢ associé est une forme rectangulaire dont la longueur est égale à celle du module et la largeur est au moins égale à deux diamètres d'ouverture de l'enceinte et au maximum égale à la largeur du module. En divisant ce rectangle par les lignes reliant les milieux des côtés opposés, quatre rectangles égaux sont obtenus et définissent les limites géométriques des ouvertures des modules élémentaires : elles occupent deux de ces petits rectangles, ceux-ci n'ayant qu'un seul sommet en commun. Il y a donc deux combinaisons possibles parmi lesquelles il faut choisir en fonction de la configuration des obturations des enceintes aux extrémités de l'association fluidique : l'une des ouvertures du module élémentaire Mᵢ ne doit pas être adjacente à une ouverture obturée de l'enceinte 100ᵢ.

La figure 6 illustre une enceinte à fluide 100ᵢ présentant une compacité améliorée, sa largeur étant inférieure à celle du module élémentaire Mᵢ associé avec qui elle est en contact par le dessus de celui-ci.

Ainsi, les situations des figures 7 à 9 correspondent respectivement au cas des figures 1 à 3, par un choix judicieux des positions des trois volets 105₁, 105₂ et 105₃.

Les avantages de ce premier mode de réalisation sont :
- une réalisation mécanique simple des enceintes à fluide 100ᵢ, avec un seul volet 105ᵢ,
- une seule pièce en mouvement et un seul actionneur par module élémentaire,
- la possibilité de réduire la largeur de l'enceinte jusqu'à la limite d'une dimension équivalente à deux fois le diamètre des ouvertures des modules,
- la possibilité d'intégrer l'enceinte dans la conception d'un module,
- la possibilité de fonctionner dans tous les modes principaux,
- selon une variante avec un volet 109ᵢ supplémentaire à l'entrée Eᵢ et/ou à la sortie Sᵢ, il y a une possibilité de réaliser une association en parallèle d'uniquement une partie des modules choisis parmi la pluralité,
- un très faible encombrement,
- une conception intégrale,
- la possibilité de réalisation en matériau isolant de type polystyrène expansé moulé,
- l'isolation par l'extérieur permet une bonne compacité, un gain en surface d'isolation et une bonne efficacité de l'ensemble.

La hauteur d'une enceinte à fluide 100ᵢ sera typiquement comprise entre 5 et 15 cm environ tandis que sa longueur et sa largeur seront de l'ordre de 1 m environ par exemple.

Dans un deuxième mode de réalisation correspondant aux figures 11 à 17 maintenant, le dispositif de distribution 10 peut comprendre :
- un distributeur d'alimentation fluidique 200 commun aux modules élémentaires Mᵢ de la pluralité et raccordé à l'entrée Eᵢ de chacun desdits modules élémentaires Mᵢ,
- un collecteur d'extraction fluidique 201 commun aux modules élémentaires Mᵢ de la pluralité,
- des conduites de raccordement 202ᵢ reliant le distributeur d'alimentation 200 et le collecteur d'extraction 201 au niveau de chaque module élémentaire Mᵢ, chaque conduite de raccordement étant raccordée à la sortie de l'un des modules élémentaires de la pluralité,
- un premier registre de fermeture Ri.1, notamment de type « tout ou rien » par exemple à volet papillon, associé à chaque module élémentaire Mᵢ et agencé sur la conduite de raccordement 202ᵢ, entre la sortie Sᵢ du module élémentaire Mᵢ associé et le raccordement au collecteur d'extraction 201,
- un deuxième registre de fermeture Ri.2, notamment de type « tout ou rien » par exemple à volet papillon, associé à chaque module élémentaire Mᵢ et agencé sur la conduite de raccordement 202ᵢ entre la sortie Sᵢ du module élémentaire Mᵢ associé et le raccordement au distributeur d'alimentation 200,
- un troisième registre de fermeture Ri.3, notamment de type « tout ou rien » par exemple à volet papillon, associé à chaque module élémentaire Mᵢ et agencé sur le distributeur d'alimentation 200 au niveau du module élémentaire Mᵢ associé, notamment entre les piquages reliant l'entrée Eᵢ et la sortie Sᵢ du module élémentaire au distributeur d'alimentation 200.

Pour répondre aux exigences de circuits spécifiques à l'application de stockage thermochimique, ce deuxième mode de réalisation fait le choix de se baser uniquement sur des composants existants tout en offrant une compacité remarquable en regard du nombre d'associations fluidiques différentes à réaliser. Il permet également d'envisager un montage sur site, simplifié et à un coût réduit.

| Mode | Etat du réacteur « x » | Registre Rx.1 | Registre Rx.2 | Registre Rx.3 |
|---|---|---|---|---|
| A | En fonctionnement | Ouvert | Fermé | Fermé |
| | A l'arrêt | Fermé | Ouvert | Ouvert |
| B | En fonctionnement, sauf dernier de série | Fermé | Ouvert | Fermé |
| | En fonctionnement, dernier réacteur | Ouvert | Fermé | Fermé |
| | A l'arrêt | Fermé | Ouvert | Ouvert |
| C | En fonctionnement | Ouvert | Fermé | Ouvert |
| | A l'arrêt | Fermé | Ouvert | Ouvert |

Ce tableau confirme que le schéma de principe proposé à la figure 11 permet effectivement de réaliser tous les modes décrits aux figures 1 à 3.

Ce schéma de principe contient uniquement des composants industriels standardisés. Il n'y a donc pas de difficulté particulière de réalisation et le coût reste très modéré.

Il peut également être constaté du tableau que les registres Ri.1 et Ri.2 (où i correspond à l'indice du module élémentaire Mᵢ, comme précédemment) sont systématiquement en opposition. Les premier et deuxième registres de fermeture Ri.1 et Ri.2 peuvent donc avantageusement être reliés par une biellette à un actionneur unique, tel qu'un servomoteur, leur imposant en permanence des états opposés l'un de l'autre.

Les avantages de ce deuxième mode de réalisation sont :
- un coût réduit par l'utilisation de composants industriels standards,
- la possibilité de réaliser tous les modes, y compris les modes partiels (seule une partie des modules sont associés en parallèle entre eux) et combinés,
- l'utilisation de deux actionneurs par module élémentaire,
- la réalisation conjointe de la tubulure de retour (collecteur d'extraction 201) : les entrée et sortie de fluide sont de ce fait très rapprochées, ce qui facilite le raccordement du système de circulation aux modules élémentaires,
- l'absence de contrainte sur le positionnement des modules élémentaires, l'alignement n'étant pas obligatoire en raison de la possibilité d'ajout de tubulures standards entre les modules.

Les premier et deuxième registres de fermeture Ri.1 et Ri.2 peuvent alternativement et avantageusement être constitués par une vanne à trois voies placée sur la conduite de raccordement 202ᵢ. Ceci permet une amélioration de la compacité du dispositif de distribution 10, une diminution du nombre de composants et une simplification du montage aéraulique et mécanique sur site. Il suffit de remplacer dans le système précédemment décrit l'ensemble composé du té en sortie de module, des registres Ri.1, Ri.2 et de leur biellette d'entrainement, par une vanne à trois voies, notamment de type aéraulique, contenue dans une enveloppe équivalente à celle d'un té. Ceci permet en outre de réduire la distance entre les canaux parallèles de distribution et de collection.

La vanne à trois voies dans ce type d'encombrement n'est pas un composant industriel standard et peut nécessiter une phase de développement, par exemple sur une technologie de moulage plastique. Dans le sens d'une industrialisation plus forte, il est possible de limiter encore le nombre de composants en concevant une pièce unique à partir de la vanne à trois voies décrite, le registre Ri.3 et le té les reliant. Ceci permet de préparer en usine l'ensemble des parties articulées et de simplifier le montage sur site tout en conservant la flexibilité du montage tubulaire permettant de s'adapter à plusieurs dispositions facilement. Autrement dit, la partie de dispositif de distribution 10 associée à un module élémentaire Mᵢ donné est d'un seul tenant.

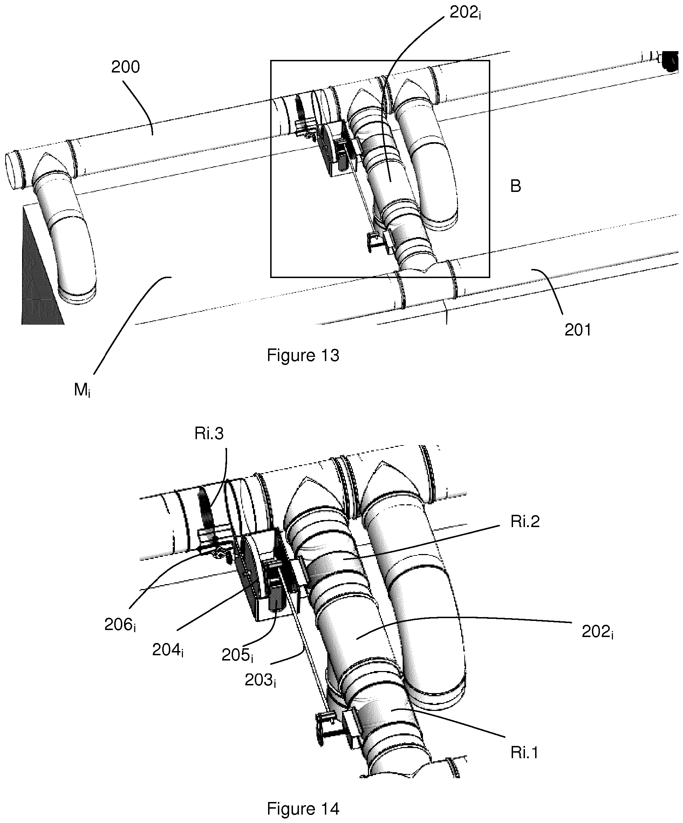

De manière encore plus avantageuse, le dispositif de distribution 10 peut comprendre un unique actionneur de pilotage associé à chaque module élémentaire Mᵢ et configuré de sorte à commander un changement d'état des premier, deuxième et troisième registres Ri.1, Ri.2 et Ri.3 en une seule action mécanique. Cette disposition est représentée aux figures 13 à 17. Ceci permet une réduction du coût du dispositif de distribution 10 par l'utilisation d'un servomoteur unique par module élémentaire de stockage thermochimique Mᵢ.

En référence aux figures 13 à 17, l'unique actionneur peut comprendre un servomoteur 204ᵢ déplaçant en rotation un système de came (lui-même incluant une biellette de transmission 203ᵢ) entre quatre positions angulaires différentes. Le déplacement du système de came d'une position à l'autre parmi les quatre possibles entraîne :
- un mouvement individuel de rotation entre deux positions angulaires d'un premier pivot 205ᵢ associé aux premier et deuxième registres Ri.1 et Ri.2,
- un mouvement individuel de rotation entre deux positions angulaires d'un deuxième pivot 206ᵢ associé au troisième registre Ri.3.

Les deux positions angulaires d'un pivot 205ᵢ, 206ᵢ donné place chacun des registres qui lui sont associés dans des états opposés, à 90 degrés l'un de l'autre. Chacune des quatre positions du système de came place les deux pivots 205ᵢ, 206ᵢ dans une combinaison unique de leurs positions angulaires. Le mouvement du pivot 205ᵢ commande une ouverture ou une fermeture du premier registre Ri.1 par l'intermédiaire de la biellette 203ᵢ. Le pivot 206ᵢ entraîne le registre Ri.3 via un renvoi d'angle par exemple par roues dentées coniques.

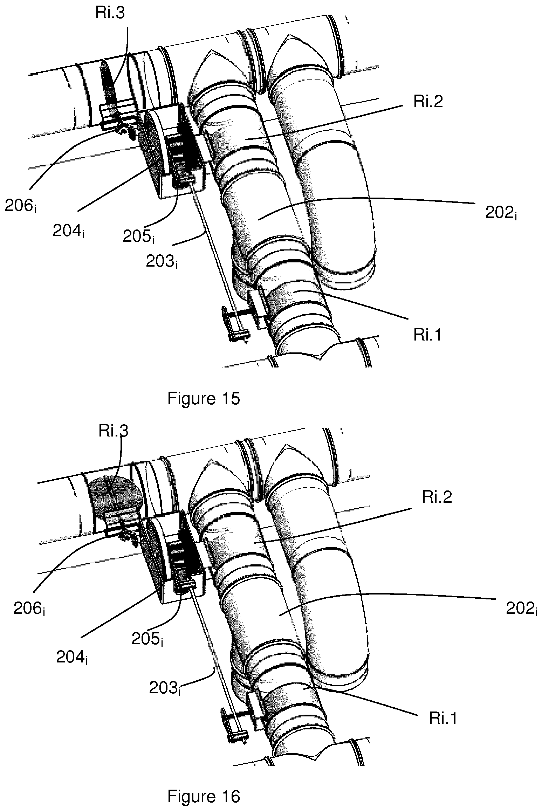

La figure 14 correspond au « mode A en fonctionnement» du tableau précédent. La figure 15 correspond au »mode B en fonctionnement » du tableau précédent. La figure 16 correspond au « mode A à l'arrêt » ou au « mode B à l'arrêt » ou au « mode C à l'arrêt » du tableau précédent. Enfin, la figure 17 correspond au «mode C en fonctionnement» du tableau précédent.

Bien que cette invention soit particulièrement adaptée au stockage thermochimique inter saisonnier basé sur des réacteurs « à lit fixe », il est également possible de l'exploiter pour :
- le séchage par circulation d'air,
- les réactions solide gaz mettant en oeuvre des volumes de réactif solide importants susceptibles d'être divisés en plusieurs modules,
- la filtration et/ou l'assèchement de l'air.

Chacun des premier et deuxième modes de réalisation permet d'associer tous les modules élémentaires de la pluralité dans une association fluidique en série entre eux. Chacun des premier et deuxième modes de réalisation permet aussi d'associer tous les modules élémentaires de la pluralité dans une association fluidique en parallèle entre eux. Les associations fluidiques en série et en parallèle selon les figures 20 et 21 ne peuvent être obtenues que par l'intermédiaire du deuxième mode de réalisation. La variante de premier mode de réalisation prévoyant des volets papillons permet avantageusement d'obtenir les associations fluidiques en série et en parallèle selon la figure 22, à condition que le sens de passage du flux fluidique dans les modules soit indifférent. Le deuxième mode de réalisation permet de parvenir au montage de la figure 25.

## Revendications

1. Système de circulation fluidique, notamment de type aéraulique, destiné à alimenter en fluide une pluralité de modules élémentaires de stockage d'énergie (Mᵢ) au niveau d'entrées (Eᵢ) respectives des modules élémentaires et à extraire du fluide hors des modules élémentaires (Mᵢ) au niveau de sorties (Sᵢ) respectives des modules élémentaires (Mᵢ), ledit système comprenant un dispositif de distribution (10) assurant une répartition d'un flux fluidique (FT) parmi tout ou partie des modules élémentaires (Mᵢ) de la pluralité et configuré de sorte à sélectionner tout ou partie des modules élémentaires parmi la pluralité et à placer les modules élémentaires sélectionnés dans une association fluidique en série entre eux et/ou dans une association fluidique en parallèle entre eux, le système étant **caractérisé en ce que** le dispositif de distribution (10) est configuré de sorte à pouvoir associer en série entre eux n'importe quels modules élémentaires (Mᵢ) choisis parmi la pluralité dans une première configuration et **en ce que** le dispositif de distribution (10) est configuré de sorte à pouvoir associer en parallèle entre eux n'importe quels modules élémentaires (Mᵢ) choisis parmi la pluralité dans une deuxième configuration.

2. Système de circulation fluidique selon la revendication 1, **caractérisé**
**en ce que** le dispositif de distribution (10) est configuré de sorte à varier sélectivement entre :
- au moins une première configuration dans laquelle au moins un module élémentaire (Mᵢ) de la pluralité est placé dans une association fluidique en série avec au moins un autre module élémentaire (Mᵢ) de la pluralité,
- et au moins une deuxième configuration dans laquelle au moins un module élémentaire (Mᵢ) de la pluralité est placé dans une association fluidique en parallèle avec au moins un autre module élémentaire (Mᵢ) de la pluralité ;
et/ou
**en ce que** dans la première configuration, un premier module élémentaire (Mi) de la pluralité est placé dans une association fluidique en série avec au moins un deuxième module élémentaire (Mi) de la pluralité, et en ce que dans la deuxième configuration le premier module élémentaire (Mi) de la pluralité est placé dans une association fluidique en parallèle avec au moins le deuxième module élémentaire (Mi) et/ou un troisième module élémentaire (Mi) de la pluralité ;
et/ou
**en ce que** dans la première configuration l'association fluidique en série desdits modules élémentaires est placée dans un montage fluidique en série avec au moins une association fluidique en parallèle d'au moins deux autres modules élémentaires choisis parmi la pluralité et/ou dans la deuxième configuration l'association fluidique en parallèle desdits modules élémentaires est placée dans un montage fluidique en série avec au moins un autre module élémentaire et/ou avec au moins une association fluidique en série d'au moins deux autres modules élémentaires choisis parmi la pluralité.

3. Système de circulation fluidique selon l'une des revendications 1 à 2, **caractérisé en ce que** le dispositif de distribution (10) est configuré de sorte à varier sélectivement entre les première et deuxième configurations et au moins une troisième configuration dans laquelle seul un module élémentaire (Mᵢ) de la pluralité est alimenté individuellement par le flux fluidique, tout module élémentaire choisi parmi la pluralité pouvant être alimenté individuellement par le flux fluidique dans la troisième configuration.

4. Système de circulation fluidique selon l'une des revendications 1 à 3, **caractérisé en ce que** le dispositif de distribution (10) comprend une pluralité d'enceintes à fluide (100ᵢ) respectivement associées aux modules élémentaires (Mᵢ) de la pluralité, une enceinte à fluide donnée étant destinée à être reliée aux entrée (Eᵢ) et sortie (Sᵢ) du module élémentaire (Mᵢ) associé, et **en ce que** chaque enceinte à fluide (100ᵢ) comprend :
- des première et deuxième entrées (101ᵢ, 102ᵢ) alimentant l'enceinte en fluide (Fᵢ) à alimenter à l'entrée du module élémentaire (Mᵢ) associé,
- des première et deuxième sorties (103ᵢ, 104ᵢ) de fluide extrayant hors de l'enceinte (100ᵢ) le fluide (Fᵢ) extrait par la sortie (Sᵢ) du module élémentaire (Mᵢ) associé ou provenant des entrées (101ᵢ, 102ᵢ),
- un volet de séparation (105ᵢ) délimitant des premier et deuxième conduits (106ᵢ, 107ᵢ) à l'intérieur de l'enceinte (100ᵢ) et monté à pivotement par rapport à l'enceinte (100ᵢ) de sorte à varier entre une première position dans laquelle le premier conduit (106ᵢ) met en communication fluidique la première entrée (101ᵢ) et la première sortie (103ᵢ) et dans laquelle le deuxième conduit (107ᵢ) met en communication fluidique la deuxième entrée (102ᵢ) et la deuxième sortie (104ᵢ) et une deuxième position dans laquelle le premier conduit (106ᵢ) ou le deuxième conduit (107ᵢ) met en communication fluidique les première et deuxième entrées (101ᵢ, 102ᵢ) et l'autre des premier et deuxième conduits (106ᵢ, 107ᵢ) met en communication fluidique les première et deuxième sorties (103ᵢ, 104ᵢ),
- l'enceinte à fluide (100ᵢ) étant configurée de sorte que quelle que soit la position occupée par le volet de séparation (105ᵢ), seul l'un des premier et deuxième conduits (106ᵢ, 107ᵢ) est apte à être en communication fluidique avec l'entrée (Eᵢ) du module élémentaire (Mᵢ) associé et seul l'autre des premier et deuxième conduits (106ᵢ, 107ᵢ) est destiné à être en communication fluidique avec la sortie (Sᵢ) du module élémentaire (Mᵢ) associé.

5. Système de circulation fluidique selon la revendication 4, **caractérisé en ce que** l'enceinte à fluide (100ᵢ) est configurée de sorte à être mise en contact contre le module élémentaire (Mᵢ) associé et **en ce que** la largeur des premier et deuxième conduits (106ᵢ, 107ᵢ), au niveau du contact avec le module élémentaire (Mᵢ) associé, est supérieure ou égale à la plus grande dimension des entrée (Eᵢ) et sortie (Sᵢ) du module élémentaire (Mᵢ) associé et/ou **caractérisé en ce que** le système comprend un actionneur, notamment de type servomoteur, associé à chaque enceinte à fluide (100ᵢ) et assurant le pivotement du volet de séparation (105ᵢ) entre ses première et deuxième positions.

6. Système de circulation fluidique selon l'une des revendications 4 à 5, **caractérisé en ce que** des première et deuxième enceintes à fluide (100ᵢ) associées à deux modules élémentaires (Mᵢ) adjacents sont assemblées entre elles de sorte que les première et deuxième sorties (103ᵢ, 104ᵢ) de la première enceinte sont en communication fluidique avec respectivement les première et deuxième entrées (101ᵢ, 102ᵢ) de la deuxième enceinte.

7. Système de circulation fluidique selon la revendication précédente, **caractérisé en ce que** les première et deuxième enceintes à fluide (100ᵢ) sont en contact, les première et deuxième sorties (103ᵢ, 104ᵢ) de la première enceinte étant placées en regard respectivement des première et deuxième entrées (101ᵢ, 102ᵢ) de la deuxième enceinte.

8. Système de circulation fluidique selon l'une des revendications 4 à 7, **caractérisé en ce que**, dans les première et/ou deuxième configurations du dispositif de distribution (10), l'une des première et deuxième entrées (101₁, 102₁) de l'enceinte à fluide (100₁) la plus en amont, suivant le sens de circulation du flux fluidique (FT), est obturée et l'une des première et deuxième sorties (103₃, 104₃) de l'enceinte à fluide (100₃) la plus en aval, suivant le sens de circulation du flux fluidique (FT), est obturée.

9. Système de circulation fluidique selon l'une des revendications 4 à 8, **caractérisé en ce que** chaque enceinte à fluide (100ᵢ) délimite un troisième conduit (108ᵢ) destiné au retour de flux fluidique (FT) après la traversée des modules élémentaires (Mᵢ), les troisièmes conduits (108ᵢ) des enceintes à fluide (100ᵢ) étant en communication fluidique entre eux.

10. Système de circulation fluidique selon l'une des revendications précédentes, **caractérisé en ce que** le dispositif de distribution (10) comprend :
- un distributeur d'alimentation fluidique (200) commun aux modules élémentaires (Mᵢ) de la pluralité et raccordé à l'entrée (Eᵢ) de chacun desdits modules élémentaires (Mᵢ),
- un collecteur d'extraction fluidique (201) commun aux modules élémentaires (Mᵢ) de la pluralité,
- des conduites de raccordement (202ᵢ) reliant le distributeur d'alimentation (200) et le collecteur d'extraction (201) au niveau de chaque module élémentaire (Mᵢ), chaque conduite de raccordement (202ᵢ) étant raccordée à la sortie (Sᵢ) de l'un des modules élémentaires (Mᵢ) de la pluralité,
- un premier registre de fermeture (Ri.1), notamment de type « tout ou rien », associé à chaque module élémentaire (Mᵢ) et agencé sur la conduite de raccordement (202ᵢ) entre la sortie (Sᵢ) du module élémentaire (Mᵢ) associé et le raccordement au collecteur d'extraction (201),
- un deuxième registre de fermeture (Ri.2), notamment de type « tout ou rien », associé à chaque module élémentaire (Mᵢ) et agencé sur la conduite de raccordement (202ᵢ) entre la sortie (Sᵢ) du module élémentaire (Mᵢ) associé et le raccordement au distributeur d'alimentation (200),
- un troisième registre de fermeture (Ri.3), notamment de type « tout ou rien », associé à chaque module élémentaire (Mᵢ) et agencé sur le distributeur d'alimentation (200) au niveau du module élémentaire (Mᵢ) associé.

11. Système de circulation fluidique selon la revendication 10, **caractérisé en ce que** les premier et deuxième registres de fermeture (Ri.1, Ri.2) sont constitués par une vanne à trois voies placée sur la conduite de raccordement (202ᵢ) ou sont reliés par une biellette à un actionneur unique, tel qu'un servomoteur, leur imposant en permanence des états opposés l'un de l'autre.

12. Système de circulation fluidique selon la revendication 10, **caractérisé en ce qu'**il comprend un unique actionneur de pilotage associé à chaque module élémentaire (Mᵢ) et configuré de sorte à commander un changement d'état des premier, deuxième et troisième registres (Ri.1, Ri.2, Ri.3) en une seule action mécanique.

13. Système de circulation fluidique selon la revendication précédente, **caractérisé en ce que** l'unique actionneur comprend un servomoteur (204ᵢ) déplaçant en rotation un système de came entre quatre positions angulaires différentes, le déplacement du système de came entraînant un mouvement individuel de rotation entre deux positions angulaires de deux pivots (205ᵢ, 206ᵢ) distincts respectivement associés aux premier et deuxième registres (Ri.1, Ri.2) et au troisième registre (Ri.3), les deux positions angulaires d'un pivot (205ᵢ, 206ᵢ) donné plaçant chacun des registres associés dans des états opposés, chacune des quatre positions du système de came plaçant les deux pivots (205ᵢ, 206ᵢ) dans une combinaison unique de leurs positions angulaires.

14. Installation comprenant un système de circulation fluidique selon l'une quelconque des revendications précédentes et une pluralité de modules élémentaires de stockage d'énergie (Mᵢ) ayant chacun une entrée (Eᵢ) et une sortie (Sᵢ) raccordées au système.

15. Installation selon la revendication précédente, **caractérisée en ce qu'**au niveau de l'entrée (Eᵢ) et/ou de la sortie (Sᵢ) de chaque module élémentaire (Mᵢ) de la pluralité, ledit module élémentaire (Mᵢ) et/ou le dispositif de distribution (10) comporte un élément d'obturation fluidique (109ᵢ) permettant d'ajuster le débit fluidique (Fᵢ) qui traverse ladite entrée (Eᵢ) et/ou ladite sortie (Sᵢ) et/ou **en ce que** les modules élémentaires (Mᵢ) sont constitués chacun par un réacteur thermochimique ou par adsorption délivrant une puissance thermique (Pi) à un flux fluidique (Fᵢ) le traversant de son entrée (Eᵢ) vers sa sortie (Sᵢ).

16. Procédé de commande d'une installation selon l'une quelconque des revendications 14 et 15, comprenant une étape de pilotage du dispositif de distribution (10) réalisée de sorte à former un circuit fluidique prédéterminé, notamment de type aéraulique, correspondant à une association fluidique en série d'au moins deux modules élémentaires (Mᵢ) et/ou une association fluidique en parallèle d'au moins deux modules élémentaires (Mᵢ) et/ou une alimentation individuelle d'au moins l'un des modules élémentaires (Mᵢ).

17. Procédé de commande selon la revendication précédente, **caractérisé en ce que** l'installation comprenant au moins des premier et deuxième modules élémentaires de stockage d'énergie constitués chacun par un réacteur thermochimique ou par adsorption délivrant une puissance thermique (Pᵢ) à un flux fluidique (Fᵢ) le traversant, l'étape de pilotage comprend une première phase durant laquelle le dispositif de distribution (10) occupe la première configuration de sorte que le flux fluidique (Ft) traverse successivement les premier et deuxième modules élémentaires et/ou une deuxième phase durant laquelle le dispositif de distribution (10) occupe la deuxième configuration de sorte qu'une fraction du flux fluidique (FT) traverse le premier module élémentaire et que la fraction restante du flux fluidique (FT) traverse au moins le deuxième module élémentaire.

18. Procédé de commande selon la revendication précédente, **caractérisé en ce que** durant la première phase, le procédé comprend une étape de régulation de la puissance thermique (Pi) délivrée par le deuxième module élémentaire réalisée de sorte que la somme (PT) des puissances thermiques (Pi) délivrées par les deux modules élémentaires (Mᵢ) associés en série se cumulent à une valeur (K1) sensiblement constante et sensiblement égale à la puissance thermique maximale que le premier module élémentaire est apte à délivrer, notamment de sorte que la puissance thermique (Pi) délivrée par le deuxième module élémentaire compense une diminution progressive de la puissance thermique (Pi) délivrée par le premier module élémentaire au fur et à mesure de l'avancée de la réaction dans le premier module élémentaire et/ou **caractérisé en ce que** durant la deuxième phase, le procédé comprend une étape de régulation de la puissance thermique (Pi) délivrée par le deuxième module élémentaire réalisée de sorte que la somme (PT) des puissances thermiques (Pi) délivrées par les deux modules élémentaires associés en parallèle se cumulent à une valeur (K2) supérieure à la puissance thermique maximale que le premier module élémentaire est apte à délivrer.

## Patentansprüche

1. Flüssigkeitskreislaufsystem, insbesondere lufttechnischen Typs, der dazu bestimmt ist, eine Vielzahl von elementaren Energiespeichermodulen (Mᵢ) im Bereich der jeweiligen Eingänge (Eᵢ) der elementaren Module mit Flüssigkeit zu versorgen, und Flüssigkeit aus den elementaren Modulen (Mᵢ) im Bereich der jeweiligen Ausgänge (Sᵢ) der elementaren Module (Mᵢ) zu entnehmen, wobei das System eine Verteilungsvorrichtung (10) umfasst, die eine Verteilung eines Flüssigkeitsstroms (FT) unter allen oder einem Teil der elementaren Module (Mᵢ) der Vielzahl gewährleistet, und eingerichtet ist, um alle oder einen Teil der elementaren Module unter der Vielzahl auszuwählen und die ausgewählten elementaren Module in einer seriellen Flüssigkeitsverbindung zueinander und/oder in einer parallelen Flüssigkeitsverbindung zueinander anzuordnen, wobei das System **dadurch gekennzeichnet ist, dass** die Verteilungsvorrichtung (10) eingerichtet ist, um beliebige elementare Module (Mᵢ), die unter der Vielzahl ausgewählt sind, in einer ersten Konfiguration seriell miteinander verbinden zu können, und dass die Verteilungsvorrichtung (10) eingerichtet ist, um beliebige elementare Module (Mᵢ), die unter der Vielzahl ausgewählt sind, in einer zweiten Konfiguration parallel miteinander verbinden zu können.

2. Flüssigkeitskreislaufsystem nach Anspruch 1, **dadurch gekennzeichnet,**
**dass** die Verteilungsvorrichtung (10) eingerichtet ist, um selektiv zu variieren zwischen:
- mindestens einer ersten Konfiguration, in der mindestens ein elementares Modul (Mᵢ) der Vielzahl in einer seriellen Flüssigkeitsverbindung mit mindestens einem anderen elementaren Modul (Mᵢ) der Vielzahl angeordnet ist,
- und mindestens einer zweiten Konfiguration, in der mindestens ein elementares Modul (Mᵢ) der Vielzahl in einer parallelen Flüssigkeitsverbindung mit mindestens einem anderen elementaren Modul (Mᵢ) der Vielzahl angeordnet ist;
und/oder
**dass** in der ersten Konfiguration ein erstes elementares Modul (Mᵢ) der Vielzahl on einer seriellen Flüssigkeitsverbindung mit mindestens einem zweiten elementaren Modul (Mᵢ) der Vielzahl angeordnet ist, und dass in der zweiten Konfiguration das erste elementare Modul (Mᵢ) der Vielzahl in einer parallelen Flüssigkeitsverbindung mit mindestens dem zweiten elementaren Modul (Mᵢ) und/oder einem dritten elementaren Modul (Mᵢ) der Vielzahl angeordnet ist; und/oder
**dass** in der ersten Konfiguration die serielle Flüssigkeitsverbindung der elementaren Module in einer seriellen Flüssigkeitsmontage mit mindestens einer parallelen Flüssigkeitsverbindung von mindestens zwei anderen elementaren Modulen, die unter der Vielzahl ausgewählt sind, angeordnet ist, und/oder in der zweiten Konfiguration die parallele Flüssigkeitsverbindung der elementaren Module in einer seriellen Flüssigkeitsmontage mit mindestens einem anderen elementaren Modul und/oder mit mindestens einer seriellen Flüssigkeitsverbindung von mindestens zwei anderen elementaren Modulen, die unter der Vielzahl ausgewählt sind, angeordnet ist.

3. Flüssigkeitskreislaufsystem nach einem der Ansprüche 1 bis 2, **dadurch gekennzeichnet, dass** die Verteilungsvorrichtung (10) eingerichtet ist, selektiv zwischen den ersten und zweiten Konfigurationen und mindestens einer dritten Konfiguration zu variieren, in der nur ein elementares Modul (Mᵢ) der Vielzahl individuell von dem Flüssigkeitsstrom versorgt wird, wobei jedes unter der Vielzahl ausgewählte elementare Modul individuell von dem Flüssigkeitsstrom in der dritten Konfiguration versorgt werden kann.

4. Flüssigkeitskreislaufsystem nach einem der Ansprüche 1 bis 3, **dadurch gekennzeichnet, dass** die Verteilungsvorrichtung (10) eine Vielzahl von Flüssigkeitskammern (100ᵢ) umfasst, die jeweils den elementaren Modulen (Mᵢ) der Vielzahl zugeordnet sind, wobei eine gegebene Flüssigkeitskammer dazu bestimmt ist, mit dem Eingang (Eᵢ) und dem Ausgang (Sᵢ) des zugeordneten elementaren Moduls (Mᵢ) verbunden zu sein, und wobei jede Flüssigkeitskammer (100ᵢ) umfasst:
- erste und zweite Eingänge (101ᵢ, 102ᵢ), die die zu versorgende Flüssigkeitskammer (Fᵢ) am Eingang des zugeordneten elementaren Moduls (Mᵢ) versorgen,
- erste und zweite Flüssigkeitsausgänge (103ᵢ, 104ᵢ), die aus der Kammer (100ᵢ) die von dem Ausgang (Sᵢ) des zugeordneten elementaren Moduls (Mᵢ) oder von den Eingängen (101ᵢ, 102ᵢ) kommende Flüssigkeit (Fᵢ) entnehmen,
- eine Trennklappe (105ᵢ), die erste und zweite Leitungen (106ᵢ, 107ᵢ) innerhalb der Kammer (100ᵢ) begrenzt und schwenkbar in Bezug zur Kammer (100ᵢ) montiert ist, um zwischen einer ersten Position, in der die erste Leitung (106ᵢ) den ersten Eingang (101ᵢ) und den ersten Ausgang (103ᵢ) in Flüssigkeitsverbindung bringt, und in der die zweite Leitung (107ᵢ) den zweiten Eingang (102ᵢ) und den zweiten Ausgang (104ᵢ) in Flüssigkeitsverbindung bringt, und einer zweiten Position zu variieren, in der die erste Leitung (106ᵢ) oder die zweite Leitung (107ᵢ) die ersten und zweiten Eingänge (101ᵢ, 102ᵢ) in Flüssigkeitsverbindung bringt, und die andere der ersten und zweiten Leitungen (106ᵢ, 107ᵢ) die ersten und zweiten Ausgänge (103ᵢ, 104ᵢ) in Flüssigkeitsverbindung bringt,
- wobei die Flüssigkeitskammer (100ᵢ) eingerichtet ist, dass unabhängig von der von der Trennklappe (105ᵢ) eingenommenen Position nur eine der ersten und zweiten Leitungen (106ᵢ, 107ᵢ) geeignet ist, mit dem Eingang (Eᵢ) des zugeordneten elementaren Moduls (Mᵢ) in Flüssigkeitsverbindung zu sein, und nur die andere der ersten und zweiten Leitungen (106ᵢ, 107ᵢ) dazu bestimmt ist, mit dem Ausgang (Sᵢ) des zugeordneten elementaren Moduls (Mᵢ) in Flüssigkeitsverbindung zu sein.

5. Flüssigkeitskreislaufsystem nach Anspruch 4, **dadurch gekennzeichnet, dass** die Flüssigkeitskammer (100ᵢ) eingerichtet ist, um mit dem elementaren Modul (Mᵢ) in Kontakt gebracht zu werden, und dass die Breite der ersten und zweiten Leitungen (106ᵢ, 107ᵢ) im Bereich des Kontakts mit dem zugeordneten elementaren Modul (Mᵢ) größer oder gleich der größten Abmessung der Eingänge (Eᵢ) und Ausgänge (Sᵢ) des zugeordneten elementaren Moduls (Mᵢ) ist, und/oder **dadurch gekennzeichnet, dass** das System einen Aktuator, insbesondere vom Typ Servomotor, umfasst, der jeder Flüssigkeitskammer (100ᵢ) zugeordnet ist und das Schwenken der Trennklappe (105ᵢ) zwischen ihren ersten und zweiten Positionen gewährleistet.

6. Flüssigkeitskreislaufsystem nach einem der Ansprüche 4 bis 5, **dadurch gekennzeichnet, dass** erste und zweite Flüssigkeitskammern (100ᵢ), die zwei aneinandergrenzenden elementaren Modulen (Mᵢ) zugeordnet sind, zusammengefügt sind, so dass die ersten und zweiten Ausgänge (103ᵢ, 104ᵢ) der ersten Kammer mit den ersten bzw. zweiten Eingängen (101ᵢ, 102ᵢ) der zweiten Kammer in Flüssigkeitsverbindung sind.

7. Flüssigkeitskreislaufsystem nach dem vorhergehenden Anspruch, **dadurch gekennzeichnet, dass** die ersten und zweiten Flüssigkeitskammern (100ᵢ) in Kontakt sind, wobei die ersten und zweiten Ausgänge (103ᵢ, 104ᵢ) der ersten Kammer gegenüber den ersten bzw. zweiten Eingängen (101ᵢ, 102ᵢ) der zweiten Kammer angeordnet sind.

8. Flüssigkeitskreislaufsystem nach einem der Ansprüche 4 bis 7, **dadurch gekennzeichnet, dass** in der ersten und/oder zweiten Konfiguration der Verteilungsvorrichtung (10) einer der ersten und zweiten Eingänge (101₁, 102₁) der Flüssigkeitskammer (100₁), der in Zirkulationsrichtung des Flüssigkeitsstroms (FT) am weitesten stromaufwärts angeordnet ist, verschlossen ist, und einer der ersten und zweiten Ausgänge (103₃, 104₃) der Flüssigkeitskammer (100₃), der in Zirkulationsrichtung des Fluidstroms (FT) am weitesten stromabwärts angeordnet ist, verschlossen ist.

9. Flüssigkeitskreislaufsystem nach einem der Ansprüche 4 bis 8, **dadurch gekennzeichnet, dass** jede Flüssigkeitskammer (100ᵢ) eine dritte Leitung (108ᵢ) begrenzt, die für den Rücklauf des Flüssigkeitsstroms (FT) nach Durchquerung der elementaren Module (Mᵢ) bestimmt ist, wobei die dritten Leitungen (108ᵢ) der Flüssigkeitskammern (100ᵢ) miteinander in Flüssigkeitsverbindung stehen.

10. Flüssigkeitskreislaufsystem nach einem der vorhergehenden Ansprüche, **dadurch gekennzeichnet, dass** die Verteilungsvorrichtung (10) umfasst:
- einen Verteiler (200) zur Flüssigkeitsversorgung, der den elementaren Modulen (Mᵢ) der Vielzahl gemeinsam ist und and en Eingang (Eᵢ) jedes der elementaren Module (Mᵢ) angeschlossen ist,
- einen Kollektor (201) zur Flüssigkeitsentnahme, der den elementaren Modulen (Mᵢ) der Vielzahl gemeinsam ist,
- Anschlussleitungen (202ᵢ), die den Versorgungsverteiler (200) und den Entnahmekollektor (201) im Bereich jedes elementaren Moduls (Mᵢ) verbinden, wobei jede Anschlussleitung (202ᵢ) an den Ausgang (Sᵢ) eines der elementaren Module (Mᵢ) der Vielzahl angeschlossen ist,
- ein erstes Schließregister (Ri.1), insbesondere vom Typ "alles oder nichts", das jedem elementaren Modul (Mᵢ) zugeordnet ist und auf der Anschlussleitung (202ᵢ) zwischen dem Ausgang (Sᵢ) des zugeordneten elementaren Moduls (Mᵢ) und dem Anschluss an den Entnahmekollektor (201) angeordnet ist,
- ein zweites Schließregister (Ri.2), insbesondere vom Typ "alles oder nichts", das jedem elementaren Modul (Mᵢ) zugeordnet ist und auf der Anschlussleitung (202ᵢ) zwischen dem Ausgang (Sᵢ) des zugeordneten elementaren Moduls (Mᵢ) und dem Anschluss an den Versorgungsverteiler (200) angeordnet ist,
- ein drittes Schließregister (Ri.3), insbesondere vom Typ "alles oder nichts", das jedem elementaren Modul (Mᵢ) zugeordnet ist und auf dem Versorgungsverteiler (200) im Bereich des zugeordneten elementaren Moduls (Mᵢ) angeordnet ist.

11. Flüssigkeitskreislaufsystem nach Anspruch 10, **dadurch gekennzeichnet, dass** die ersten und zweiten Schließregister (Ri.1, Ri.2) von einem Dreiwegeventil gebildet sind, das auf der Anschlussleitung (202ᵢ) angeordnet ist, oder durch einen Schwenkarm mit einem einzigen Aktuator, wie einem Servomotor, verbunden sind, der ihnen ständig zueinander entgegengesetzte Zustände vorgibt.

12. Flüssigkeitskreislaufsystem nach Anspruch 10, **dadurch gekennzeichnet, dass** er einen einzigen Aktuator zur Steuerung umfasst, der jedem elementaren Modul (Mᵢ) zugeordnet und eingerichtet ist, um eine Zustandsänderung der ersten, zweiten und dritten Register (Ri.1, Ri.2, Ri.3) in einer einzigen mechanischen Aktion zu steuern.

13. Flüssigkeitskreislaufsystem nach dem vorhergehenden Anspruch, **dadurch gekennzeichnet, dass** der einzige Aktuator einen Servomotor (204ᵢ) umfasst, der ein Nockensystem zwischen vier verschiedenen Winkelpositionen in Drehung verlagert, wobei die Verlagerung des Nockensystems zu einer individuellen Drehbewegung zwischen zwei Winkelpositionen von zwei verschiedenen Zapfen (205ᵢ, 206ᵢ) führt, die den ersten bzw. zweiten Registern (Ri.1, Ri.2) und dem dritten Register (Ri.3) zugeordnet sind, wobei die zwei Winkelpositionen eines gegebenen Zapfens (205ᵢ, 206ᵢ) jedes der zugeordneten Register in entgegengesetzten Zuständen anordnet, wobei jede der vier Positionen des Nockensystems die zwei Zapfen (205ᵢ, 206ᵢ) in einer einzigen Kombination ihrer Winkelpositionen anordnet.

14. Anlage, umfassend ein Flüssigkeitskreislaufsystem nach einem der vorhergehenden Ansprüche und eine Vielzahl von elementaren Energiespeichermodulen (Mᵢ), die jeweils einen Eingang (Eᵢ) und einen Ausgang (Sᵢ) haben, die an das System angeschlossen sind.

15. Anlage nach dem vorhergehenden Anspruch, **dadurch gekennzeichnet, dass** im Bereich des Eingangs (Eᵢ) und/oder des Ausgangs (Sᵢ) jedes elementaren Moduls (Mᵢ) der Vielzahl das elementare Modul (Mᵢ) und/oder die Verteilungsvorrichtung (10) ein Flüssigkeitsverschlusselement (109ᵢ) umfasst, das es ermöglicht, die Flüssigkeitsmenge (Fᵢ), die den Eingang (Eᵢ) und/oder den Ausgang (Sᵢ) durchquert, anzupassen, und/oder dass die elementaren Module (Mᵢ) jeweils von einem thermochemischen Reaktor durch Adsorption gebildet sind, der eine Wärmeleistung (Pᵢ) an einen Flüssigkeitsstrom (Fᵢ) liefert, der in von seinem Eingang (Eᵢ) zu seinem Ausgang (Sᵢ) durchquert.

16. Verfahren zur Steuerung einer Anlage nach einem der Ansprüche 14 und 15, umfassend einen Schritt der Steuerung der Verteilungsvorrichtung (10), der derart erfolgt, dass ein vorbestimmter Flüssigkeitskreislauf, insbesondere lufttechnischen Typs, gebildet wird, entsprechend einer seriellen Flüssigkeitsverbindung von mindestens zwei elementaren Modulen (Mᵢ) und/oder einer parallelen Flüssigkeitsverbindung von mindestens zwei elementaren Modulen (Mᵢ) und/oder einer individuellen Versorgung mindestens eines der elementaren Module (Mᵢ).

17. Steuerungsverfahren nach dem vorhergehenden Anspruch, **dadurch gekennzeichnet, dass**, wobei die Anlage mindestens erste und zweite Energiespeichermodule umfasst, die jeweils von einem thermochemischen Reaktor oder durch Adsorption gebildet sind, der eine Wärmeleistung (Pᵢ) an einen ihn durchquerenden Flüssigkeitsstrom (Fᵢ) liefert, der Steuerungsschritt eine erste Phase umfasst, während der die Verteilungsvorrichtung (10) die erste Konfiguration einnimmt, so dass der Flüssigkeitsstrom (FT) nacheinander die ersten und zweiten elementaren Module durchquert, und/oder eine zweite Phase, während der die Verteilungsvorrichtung (10) die zweite Konfiguration einnimmt, so dass eine Fraktion des Flüssigkeitsstroms (FT) das erste elementare Modul durchquert, und die restliche Fraktion des Flüssigkeitsstroms (FT) zumindest das zweite elementare Modul durchquert.

18. Steuerungsverfahren nach dem vorhergehenden Anspruch, **dadurch gekennzeichnet, dass** während der ersten Phase das Verfahren einen Schritt der Regulierung der Wärmeleistung (Pi), die von dem zweien elementaren Modul geliefert wird, umfasst, der derart erfolgt, dass die Summe (PT) der Wärmeleistungen (Pᵢ), die von den zwei seriell verbundenen elementaren Modulen (Mᵢ) geliefert werden, auf einen im Wesentlichen konstanten Wert (K1) im Wesentlichen gleich der maximalen Wärmeleistung, die das erste elementare Modul liefern kann, kumulieren, insbesondere dass die von dem zweiten elementaren Modul gelieferte Wärmeleistung (Pᵢ) eine progressive Verringerung der von dem ersten elementaren Modul gelieferten Wärmeleistung (Pi) im Zuge des Fortschritts der Reaktion in dem ersten elementaren Modul ausgleicht, und/oder **dadurch gekennzeichnet, dass** während der zweiten Phase das Verfahren einen Schritt der Regulierung der Wärmeleistung (Pᵢ), die von dem zweiten elementaren Modul geliefert wird, umfasst, der derart erfolgt, dass die Summe (PT) der von den zwei parallel verbundenen elementaren Modulen gelieferten Wärmeleistungen (Pi) auf einen Wert (K2) größer als maximale Wärmeleistung, die das erste elementare Modul liefern kann, kumuliert.

## Claims

1. Fluid circulation system, particularly of the aeraulic type, intended to supply fluid to a plurality of elementary energy storage modules (Mᵢ) at respective inlets (Eᵢ) of the elementary modules and to extract fluid out of the elementary modules (Mᵢ) at respective outlets (Sᵢ) of the elementary modules (Mᵢ), said system comprising a distribution device (10) for distributing a fluid flow (FT) among all or some of the elementary modules (Mᵢ) of the plurality of modules and being configured so as to select all or some of the elementary modules from among the plurality of modules and to fluidly associate the selected elementary modules in series with each other and/or parallel with each other, the system being **characterized in that** the distribution device (10) is configured so as to be able to associate any of the elementary modules (Mᵢ) selected from among the plurality of modules in series with each other in a first configuration and **in that** the distribution device (10) is configured so as to be able to associate any of the elementary modules (Mᵢ) selected from among the plurality of modules in parallel with each other in a second configuration.

2. Fluid circulation system according to Claim 1, **characterized in that** the distribution device (10) is configured so as to selectively vary between:
- at least one first configuration, in which at least one elementary module (Mᵢ) of the plurality of modules is fluidly associated in series with at least one other elementary module (Mᵢ) of the plurality of modules; and
- at least one second configuration, in which at least one elementary module (Mᵢ) of the plurality of modules is fluidly associated in parallel with at least one other elementary module (Mᵢ) of the plurality of modules;
and/or
**in that**, in the first configuration, a first elementary module (Mᵢ) of the plurality of modules is fluidly associated in series with at least one second elementary module (Mᵢ) of the plurality of modules, and **in that**, in the second configuration, the first elementary module (Mᵢ) of the plurality of modules is fluidly associated in parallel with at least the second elementary module (Mᵢ) and/or a third elementary module (Mᵢ) of the plurality of modules;
and/or
**in that**, in the first configuration, the in series fluid association of said elementary modules is placed in a fluid assembly in series with at least one in parallel fluid association of at least two other elementary modules selected from among the plurality of modules and/or in the second configuration the in parallel fluid association of said elementary modules is placed in a fluid assembly in series with at least one other elementary module and/or with at least one in series fluid association of at least two other elementary modules selected from among the plurality of modules.

3. Fluid circulation system according to either of Claims 1 and 2, **characterized in that** the distribution device (10) is configured so as to selectively vary between the first and second configurations and at least one third configuration, in which only one elementary module (Mᵢ) of the plurality of modules is individually supplied by the fluid flow, with any elementary module selected from among the plurality of modules being able to be individually supplied by the fluid flow in the third configuration.

4. Fluid circulation system according to any of Claims 1 to 3, **characterized in that** the distribution device (10) comprises a plurality of fluid chambers (100ᵢ) respectively associated with the elementary modules (Mᵢ) of the plurality of modules, a given fluid chamber being intended to be linked to the inlet (Eᵢ) and outlet (Sᵢ) of the associated elementary module (Mᵢ), and **in that** each fluid chamber (100ᵢ) comprises:
- first and second inlets (101ᵢ, 102ᵢ) supplying the chamber with fluid (Fᵢ) to be supplied to the inlet of the associated elementary module (Mᵢ);
- first and second fluid outlets (103ᵢ, 104ᵢ) extracting out of the chamber (100ᵢ) the fluid (Fᵢ) that is extracted through the outlet (Sᵢ) of the associated elementary module (Mᵢ) or that originates from the inlets (101ᵢ, 102i) ;
- a separation flap (105ᵢ) defining first and second ducts (106i, 107ᵢ) inside the chamber (100ᵢ) and pivotally mounted relative to the chamber (100ᵢ) so as to vary between a first position, in which the first duct (106ᵢ) places the first inlet (101ᵢ) and the first outlet (103ᵢ) in fluid communication and in which the second duct (107ᵢ) places the second inlet (102ᵢ) and the second outlet (104ᵢ) in fluid communication, and a second position, in which the first duct (106ᵢ) or the second duct (107ᵢ) places the first and second inlets (101ᵢ, 102ᵢ) in fluid communication and the other one of the first and second ducts (106ᵢ, 107ᵢ) places the first and second outlets (103ᵢ, 104ᵢ) in fluid communication;
- the fluid chamber (100ᵢ) being configured so that, regardless of the position occupied by the separation flap (105ᵢ), only one of the first and second ducts (106ᵢ, 107ᵢ) is able to be in fluid communication with the inlet (Eᵢ) of the associated elementary module (Mᵢ) and only the other one of the first and second ducts (106ᵢ, 107ᵢ) is intended to be in fluid communication with the outlet (Sᵢ) of the associated elementary module (Mᵢ).

5. Fluid circulation system according to Claim 4, **characterized in that** the fluid chamber (100ᵢ) is configured so as to come into contact against the associated elementary module (Mᵢ) and **in that** the width of the first and second ducts (106ᵢ, 107ᵢ), at the point of contact with the associated elementary module (Mᵢ), is greater than or equal to the largest dimension of the inlet (Eᵢ) and outlet (Sᵢ) of the associated elementary module (Mᵢ), and/or **characterized in that** the system comprises an actuator, particularly of the servomotor type, associated with each fluid chamber (100ᵢ) and pivoting the separation flap (105ᵢ) between the first and second positions thereof.

6. Fluid circulation system according to either of Claims 4 and 5, **characterized in that** first and second fluid chambers (100ᵢ) associated with two adjacent elementary modules (Mᵢ) are assembled together so that the first and second outlets (103ᵢ, 104ᵢ) of the first chamber are in fluid communication with the first and second inlets (101ᵢ, 102ᵢ), respectively, of the second chamber.

7. Fluid circulation system according to the preceding claim, **characterized in that** the first and second fluid chambers (100ᵢ) are in contact, the first and second outlets (103ᵢ, 104ᵢ) of the first chamber being placed facing the first and second inlets (101ᵢ, 102ᵢ), respectively, of the second chamber.

8. Fluid circulation system according to any of Claims 4 to 7, **characterized in that**, in the first and/or second configurations of the distribution device (10), one of the first and second inlets (101₁, 102₁) of the fluid chamber (100₁) furthest upstream, in the direction of circulation of the fluid flow (FT), is sealed and one of the first and second outlets (103₃, 104₃) of the fluid chamber (100₃) furthest downstream, in the direction of circulation of the fluid flow (FT), is sealed.

9. Fluid circulation system according to any of claims 4 to 8, **characterized in that** each fluid chamber (100ᵢ) defines a third duct (108ᵢ) intended for the return of the fluid flow (FT) following passage through the elementary modules (Mᵢ), the third ducts (108ᵢ) of the fluid chambers (100ᵢ) being in fluid communication with each other.

10. Fluid circulation system according to any of the preceding claims, **characterized in that** the distribution device (10) comprises:
- a fluid supply distributor (200) common to the elementary modules (Mᵢ) of the plurality of modules and connected to the inlet (Eᵢ) of each of said elementary modules (Mᵢ);
- a fluid extraction manifold (201) common to the elementary modules (Mᵢ) of the plurality of modules;
- connection ducts (202ᵢ) linking the supply distributor (200) and the extraction manifold (201) at each elementary module (Mᵢ), each connection duct (202ᵢ) being connected to the outlet (Sᵢ) of one of the elementary modules (Mᵢ) of the plurality of modules;
- a first closure gate (Ri.1), particularly of the "on or off" type, associated with each elementary module (Mᵢ) and arranged on the connection duct (202ᵢ) between the outlet (Sᵢ) of the associated elementary module (Mᵢ) and the connection to the extraction manifold (201);
- a second closure gate (Ri.2), particularly of the "on or off" type, associated with each elementary module (Mᵢ) and arranged on the connection duct (202ᵢ) between the outlet (Sᵢ) of the associated elementary module (Mᵢ) and the connection to the supply distributor (200);
- a third closure gate (Ri.3), particularly of the "on or off" type, associated with each elementary module (Mᵢ) and arranged on the supply distributor (200) at the associated elementary module (Mᵢ).

11. Fluid circulation system according to Claim 10, **characterized in that** the first and second closure gates (Ri.1, Ri.2) are formed by a three-way valve placed on the connection duct (202ᵢ) or are linked by a link rod to a single actuator, such as a servomotor, continuously applying thereto states that are opposite to each other.

12. Fluid circulation system according to Claim 10, **characterized in that** it comprises a single control actuator associated with each elementary module (Mᵢ) and configured so as to control a change of state of the first, second and third gates (Ri.1, Ri.2, Ri.3) in a single mechanical action.

13. Fluid circulation system according to the preceding claim, **characterized in that** the single actuator comprises a servomotor (204ᵢ) rotationally moving a cam system between four different angular positions, the movement of the cam system leading to an individual rotation movement between two angular positions of two distinct pivots (205ᵢ, 206ᵢ) respectively associated with the first and second gates (Ri.1, Ri.2) and with the third gate (Ri.3), the two angular positions of a given pivot (205ᵢ, 206ᵢ) placing each of the associated gates in opposite states, each of the four positions of the cam system placing the two pivots (205ᵢ, 206ᵢ) in a unique combination of the angular positions thereof.

14. Installation comprising a fluid circulation system according to any of the preceding claims and a plurality of elementary energy storage modules (Mᵢ) each having an inlet (Eᵢ) and an outlet (Sᵢ) connected to the system.

15. Installation according to the preceding claim, **characterized in that**, at the inlet (Eᵢ) and/or the outlet (Sᵢ) of each elementary module (Mᵢ) of the plurality of modules, said elementary module (Mᵢ) and/or the distribution device (10) comprises a fluid sealing element (109ᵢ) allowing the fluid flow (Fᵢ) that passes through said inlet (Eᵢ) and/or said outlet (Sᵢ) to be adjusted and/or **in that** the elementary modules (Mᵢ) are each formed by a thermochemical reactor or by adsorption delivering a thermal power (Pi) to a fluid flow (Fᵢ) passing therethrough from its inlet (Eᵢ) to its outlet (Sᵢ).

16. Method for controlling an installation according to either of Claims 14 and 15, comprising a step of controlling the distribution device (10) implemented so as to form a predetermined fluid circuit, particularly of the aeraulic type, corresponding to an in series fluid association of at least two elementary modules (Mᵢ) and/or an in parallel fluid association of at least two elementary modules (Mᵢ) and/or an individual supply of at least one of the elementary modules (Mᵢ).

17. Control method according to the preceding claim, **characterized in that**, with the installation comprising at least first and second elementary energy storage modules each formed by a thermochemical reactor or by adsorption delivering a thermal power (Pᵢ) to a fluid flow (Fᵢ) passing therethrough, the control step comprises a first phase, during which the distribution device (10) is in the first configuration so that the fluid flow (Ft) successively passes through the first and second elementary modules and/or a second phase, during which the distribution device (10) is in the second configuration, so that a fraction of the fluid flow (FT) passes through the first elementary module and so that the remaining fraction of the fluid flow (FT) passes through at least the second elementary module.

18. Control method according to the preceding claim, **characterized in that**, during the first phase, the method comprises a step of controlling the thermal power (Pi) delivered by the second elementary module implemented so that the sum (PT) of the thermal powers (Pi) delivered by the two elementary modules (Mᵢ) associated in series adds up to a value (K1) that is substantially constant and substantially equal to the maximum thermal power that the first elementary module is able to deliver, particularly so that the thermal power (Pi) delivered by the second elementary module compensates a progressive reduction in the thermal power (Pi) delivered by the first elementary module as the reaction progresses in the first elementary module, and/or **characterized in that**, during the second phase, the method comprises a step of controlling the thermal power (Pi) delivered by the second elementary module completed so that the sum (PT) of the thermal powers (Pi) delivered by the two elementary modules associated in parallel adds up to a value (K2) that is greater than the maximum thermal power that the first elementary module is able to deliver.
